(19) Europäisches Patentamt
European Patent Office
Office européen des brevets

(11) **EP 4 210 378 B1**

(12) **EUROPEAN PATENT SPECIFICATION**

(45) Date of publication and mention
of the grant of the patent:
**10.12.2025 Bulletin 2025/50**

(21) Application number: **20958357.4**

(22) Date of filing: **23.10.2020**

(51) International Patent Classification (IPC):
*H04W 24/08* (2009.01)  *H04B 7/06* (2006.01)
*H04L 5/00* (2006.01)  *H04W 24/10* (2009.01)

(52) Cooperative Patent Classification (CPC):
**H04W 24/08; H04B 7/0626; H04L 5/0048;**
**H04W 24/10**

(86) International application number:
**PCT/CN2020/123410**

(87) International publication number:
**WO 2022/082775 (28.04.2022 Gazette 2022/17)**

(54) **CHANNEL STATE INFORMATION REPORTING METHOD AND APPARATUS**

VERFAHREN UND VORRICHTUNG ZUR MELDUNG VON KANALSTATUSINFORMATIONEN

PROCÉDÉ ET APPAREIL DE RAPPORT D'INFORMATIONS D'ÉTAT DE CANAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**12.07.2023 Bulletin 2023/28**

(73) Proprietor: **Huawei Technologies Co., Ltd.**
**Shenzhen, Guangdong 518129 (CN)**

(72) Inventors:
• **ZHANG, Yongping**
**Shenzhen, Guangdong 518129 (CN)**
• **YU, Zheng**
**Shenzhen, Guangdong 518129 (CN)**
• **GE, Shibin**
**Shenzhen, Guangdong 518129 (CN)**
• **JI, Liuliu**
**Shenzhen, Guangdong 518129 (CN)**
• **LI, Tie**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
**WO-A1-2019/241912**  **CN-A- 108 023 697**
**US-A1- 2019 260 532**

• **QUALCOMM INCORPORATED: "CSI**
**enhancements: MTRP and FR1 FDD reciprocity",**
**vol. RAN WG1, no. e-Meeting; 20200817 -**
**20200828, 8 August 2020 (2020-08-08),**
**XP052348168, Retrieved from the Internet**
**<URL:https://ftp.3gpp.org/tsg_ran/WG1_RL1/**
**TSGR1_102-e/Docs/R1-2006796.zip R1-2006796**
**Further enhancements on CSI measurement and**
**reporting.docx> [retrieved on 20200808]**
• **MEDIATEK INC: "CSI enhancement for NCJT",**
**vol. RAN WG1, no. e-Meeting; 20200817 -**
**20200828, 8 August 2020 (2020-08-08),**
**XP052346997, Retrieved from the Internet**
**<URL:https://ftp.3gpp.org/tsg_ran/WG1_RL1/**
**TSGR1_102-e/Docs/R1-2005623.zip R1-2005623**
**CSI enhancements for NCJT.docx> [retrieved on**
**20200808]**
• **HUAWEI ET AL: "Details of QCL assumptions**
**and related RS design considerations", vol. RAN**
**WG1, no. Nagoya, Japan; 20170918 - 20170921,**
**17 September 2017 (2017-09-17), XP051338944,**
**Retrieved from the Internet <URL:http://**
**www.3gpp.org/ftp/Meetings_3GPP_SYNC/RAN1/**
**Docs/> [retrieved on 20170917]**

- INTEL CORPORATION: "NR PDSCH UE demodulation requirements", 3GPP DRAFT; R4-1806284 - NR UE PDSCH REQUIREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Busan, South Korea; 20180521 - 20180525, 20 May 2018 (2018-05-20), Mobile Competence Centre ; 650, route des Lucioles ; F-06921 Sophia-Antipolis Cedex ; France , XP051445977

- HUAWEI ET AL: "Remaining issues for CSI framework", 3GPP DRAFT; R1-1719426, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 17 November 2017 (2017-11-17), Mobile Competence Centre ; 650, route des Lucioles ; F-06921 Sophia-Antipolis Cedex ; France , pages 1 - 8, XP051369128

**Description**

**TECHNICAL FIELD**

This application relates to the field of communications technologies, and in particular, to a method for reporting channel state information and an apparatus.

**BACKGROUND**

A new radio (New Radio, NR) system may use a multiple transmission reception point (transmission reception point, TRP) transmission technology to improve downlink performance. Specifically, two TRPs may simultaneously provide a data transmission service for same user equipment (user equipment, UE). In terms of an implementation, a current communications standard provides two transmission schemes: a transmission scheme based on multiple downlink control information (downlink control information, DCI) and a transmission scheme based on single DCI.

In the multi-DCI-based transmission scheme, two TRPs each send DCI to UE, and the DCI is used to schedule a physical downlink shared channel (physical downlink shared channel, PDSCH) to send service data to the UE. In the single-DCI-based transmission scheme, two TRPs schedule a same PDSCH by using same DCI to send service data to UE, some layers or some demodulation reference signal (demodulation reference signal, DMRS) ports on the PDSCH are occupied by one TRP, and the other layers or DMRS ports are occupied by the other TRP.

A TRP sends DCI to UE based on a CSI measurement result reported by the UE, to schedule a PDSCH. Currently, a case of a plurality of TRPs is not considered in reporting and measuring CSI by UE. This may cause a deviation of a CSI measurement result, thereby deteriorating system performance.

Further, the document R1-2006796, 3GPP draft, RAN WG 1, August 8, 2020 refers to CSI enhancements concerning MTRP and FR1 FDD reciprocity.

Further, the document R1-2005623, 3GPP draft, RAN WG1, August 8, 2020 refers to CSI enhancements for NCJT.

Further, the document R1-1715476, 3GPP draft, RAN WG1, September 17, 2017 refers to details of QCL assumptions and related RS design considerations.

**SUMMARY**

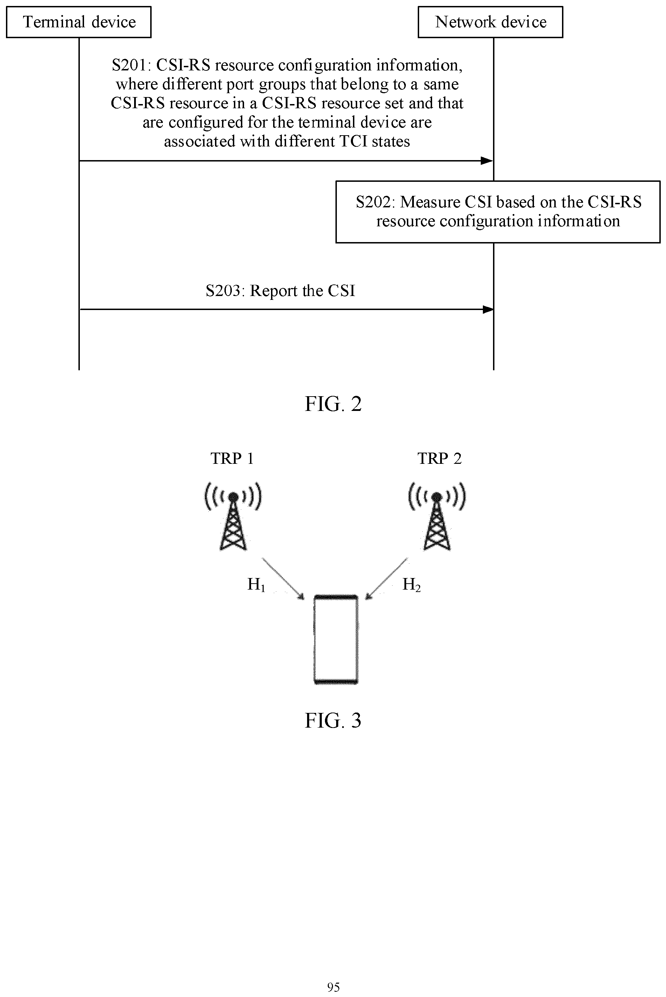

This application provides a method for reporting channel state information and an apparatus, to resolve a problem that system performance deteriorates due to an inaccurate measurement result. This problem is solved by the subject matter of the independent claims. Further implementation forms are provided in the dependent claims. In the following, the embodiments of the invention are described with particular reference to Figs. 2 and 6-8, while the other embodiments, examples and/or aspects of the disclosure are provided for illustrative purposes to support a better understanding of the invention. According to the invention. an embodiment of this application provides a method for reporting channel state information preformed by a terminal device. The terminal device receives channel state information-reference signal CSI-RS resource configuration information from a network device. The CSI-RS resource configuration information includes a CSI-RS resource set, the CSI-RS resource set includes at least a first CSI-RS resource, an association relationship exists between a first port group corresponding to the first CSI-RS resource and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group. Further, the terminal device measures CSI based on the CSI-RS resource configuration information, and then reports the CSI to the network device. In the foregoing manner, when performing channel measurement on a CSI-RS resource associated with different transmission configuration indicators, the terminal device obtains a result assuming that two TRPs serve the terminal device. This avoids an inaccurate measurement result, and reduces impact on system performance.

In a possible design, the CSI-RS resource set further includes a second CSI-RS resource, and an association relationship exists between a port corresponding to the second CSI-RS resource and a third transmission configuration indicator state. The CSI includes a first measurement result obtained by performing CSI measurement on a CSI-RS resource in the CSI-RS resource set, and the first measurement result includes a first CSI parameter and a second CSI parameter. The first CSI parameter includes a first channel state information-reference signal resource indicator CRI, a CSI-RS resource indicated by the first CRI is the first CSI-RS resource, and a CSI parameter other than the first CRI in the first CSI parameter is determined on the first CSI-RS resource. The second CSI parameter includes a second CRI, a CSI-RS resource indicated by the second CRI is the second CSI-RS resource, and a CSI parameter other than the second CRI in the second CSI parameter is determined on the second CSI-RS resource. According to the foregoing solution, the CSI reported by the terminal device includes two parts. When the terminal device measures the CSI based on the CSI-RS resource associated with the two TCI states, it is actually assumed that two TRPs serve the terminal device simultaneously, a better CSI measurement result can be obtained. When a plurality of TRPs are used for scheduling, interference to transmission between different TRPs is prevented. In addition, the measurement result obtained assumed that the two TRPs serve the terminal device simultaneously can better reflect a total channel state between the two TRPs and the terminal device, to improve system performance. The terminal device further measures the CSI on the CSI-RS resource associated with one TCI state, a channel state between one TRP and the terminal device can be reflected, and a possibility that the terminal device performs scheduling by using a single TRP is improved.

In a possible design, the port in the first port group belongs to a first code division multiple access CDM group set, and the first CDM group set includes one or more CDM groups. An association relationship exists between the first CDM group set and the first transmission configuration indicator state. The port in the second port group belongs to a second code division multiple access CDM group set, and the second CDM group set includes one or more CDM groups. An association relationship exists between the second CDM group set and the second transmission configuration indicator state. An identifier of a CDM group in the first CDM group set is different from an identifier of a CDM group in the second CDM group set. In the foregoing design, it is simple and effective to distinguish an associated IRP by using a CDM group.

In a possible design, the first CSI-RS resource includes J CDM groups, where J is an integer greater than 1. The first CDM group set includes J1 CDM groups, and the J1 CDM groups are the first CDM group to the $J1^{th}$ CDM group of the J CDM groups. The second CDM group set includes J1 CDM groups, the J1 CDM groups are the $(J-J1+1)^{th}$ CDM group to the $J^{th}$ CDM group of the J CDM groups, and J1=floor(J/2), where floor() represents an operation of rounding down to the nearest integer. In the foregoing design, a simple and effective association relationship between a port group and a transmission configuration indicator state is provided. In addition, a quantity of port groups associated with different transmission configuration indicator states is the same, thereby reducing complexity of implementation by the terminal device.

According to the invention. a time-frequency resource corresponding to the port included in the first port group and a time-frequency resource corresponding to the port included in the second port group are located in different time units. In the foregoing design, port groups associated with different transmission configuration indicator states are located in different time units, so that beam switching time is provided for the terminal device to receive service data on different beams, to improve integrity of the service data received by the terminal device.

In a possible design, the first transmission configuration indicator state includes a quasi co-location type D, and/or the second transmission configuration indicator state includes a quasi co-location type D. A time-frequency resource corresponding to the port included in the first port group and a time-frequency resource corresponding to the port included in the second port group are located in different time units. The quasi co-location type D is used to indicate a receiving analog beam, the first transmission configuration indicator state includes the quasi co-location type D, and/or the second transmission configuration indicator state includes the quasi co-location type D. The terminal device may use different analog beams. Therefore, port groups associated with different transmission configuration indicator states are located in different time units, so that beam switching time is provided for the terminal device to receive service data on different beams, to improve integrity of the service data received by the terminal device.

According to the invention, the time-frequency resource corresponding to the port included in the first port group and the time-frequency resource corresponding to the port included in the second port group are not adjacent in time domain. In the foregoing design, port groups associated with different transmission configuration indicator states are located in different time units and are not adjacent to each other, so that sufficient beam switching time is further provided for the terminal device to receive service data on different beams, to improve integrity of the service data received by the terminal device.

According to the invention, a quantity of time units between the time-frequency resource corresponding to the port included in the first port group and the time-frequency resource corresponding to the port included in the second port group in time domain is greater than or equal to a capability parameter reported by the terminal device. In the foregoing design, port groups associated with different transmission configuration indicator states are located in different time units, and a quantity of time units between is greater than or equal to the capability parameter reported by the terminal device, so that sufficient beam switching time is further provided for the terminal device to receive service data on different beams, to improve integrity of the service data received by the terminal device.

In a possible design, the terminal device receives mode indication information from the network device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N.

According to the invention. an embodiment of this application provides a method for reporting channel state information performed by a network device. The network device sends channel state information-reference signal CSI-RS resource configuration information to a terminal device. The CSI-RS resource configuration information includes a CSI-RS resource set, the CSI-RS resource set includes at least a first CSI-RS resource, an association relationship exists between a first port group corresponding to the first CSI-RS resource and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group. The network device receives CSI reported by the terminal device. The CSI is obtained by the terminal device by measuring the CSI based on the CSI-RS resource configuration information.

In a possible design, the CSI-RS resource set further includes a second CSI-RS resource, and an association relationship exists between a port corresponding to the second CSI-RS resource and a third transmission configuration indicator state. The CSI includes a first measurement result obtained by performing CSI measurement on a CSI-RS resource in the CSI-RS resource set, and the first measurement result includes a first CSI parameter and a second CSI parameter. The first CSI parameter includes a first channel state information-reference signal resource indicator CRI, a CSI-RS resource indicated by the first CRI is the first CSI-RS resource, and a CSI parameter other than the first CRI in the first CSI parameter is determined on the first CSI-RS resource. The second CSI parameter includes a second CRI, a CSI-RS resource indicated by the second CRI is the second CSI-RS resource, and a CSI parameter other than the second CRI in the second CSI parameter is determined on the second CSI-RS resource.

In a possible design, the port in the first port group belongs to a first code division multiple access CDM group set, and the first CDM group set includes one or more CDM groups. An association relationship exists between the first CDM group set and the first transmission configuration indicator state. The port in the second port group belongs to a second code division multiple access CDM group set, and the second CDM group set includes one or more CDM groups. An association relationship exists between the second CDM group set and the second transmission configuration indicator state. An identifier of a CDM group in the first CDM group set is different from an identifier of a CDM group in the second CDM group set.

In a possible design, the first CSI-RS resource includes J CDM groups, where J is an integer greater than 1. The first CDM group set includes J1 CDM groups, and the J1 CDM groups are the first CDM group to the $J1^{th}$ CDM group of the J CDM groups. The second CDM group set includes J1 CDM groups, the J1 CDM groups are the $(J-J1+1)^{th}$ CDM group to the $J^{th}$ CDM group of the J CDM groups, and J1=floor(J/2), where floor() represents an operation of rounding down to the nearest integer.

According to the invention, a time-frequency resource corresponding to the port included in the first port group and a time-frequency resource corresponding to the port included in the second port group are located in different time units.

In a possible design, the first transmission configuration indicator state includes a quasi co-location type D, and/or the second transmission configuration indicator state includes a quasi co-location type D. A time-frequency resource corresponding to the port included in the first port group and a time-frequency resource corresponding to the port included in the second port group are located in different time units.

According to the invention, the time-frequency resource corresponding to the port included in the first port group and the time-frequency resource corresponding to the port included in the second port group are not adjacent in time domain.

According to the invention, . a quantity of time units between the time-frequency resource corresponding to the port included in the first port group and the time-frequency resource corresponding to the port included in the second port group in time domain is greater than or equal to a capability parameter reported by the terminal device.

In a possible design, the network device sends mode indication information to the terminal device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N.

According to a third aspect, an embodiment of this application provides a method for reporting channel state information. The method is applied to a communication apparatus. The communication apparatus may be a terminal device, or a chip or chip system in the terminal device. The terminal device is used as an example. The terminal device receives first channel state information-reference signal CSI-RS resource configuration information from a network device. The first CSI-RS resource configuration information includes a CSI-RS resource set, the CSI-RS resource set includes at least a first CSI-RS resource group, the first CSI-RS resource group includes a first CSI-RS resource and a second CSI-RS resource, an association relationship exists between the first CSI-RS resource and a first transmission configuration indicator state, an association relationship exists between the second CSI-RS resource and a second transmission configuration indicator state, and an association relationship exists between the first CSI-RS resource and the second CSI-RS resource. Further, the terminal device measures CSI based on the first CSI-RS resource configuration information, and reports the CSI to the network device. In the foregoing manner, when performing channel measurement on a plurality of CSI-RS resources associated with different transmission configuration indicators, the terminal device obtains a result assuming that two TRPs serve the terminal device. This avoids an inaccurate measurement result, and reduces impact on system performance.

In a possible design, the CSI resource configuration information further includes a third CSI-RS resource, and the third CSI-RS resource is associated with a third transmission configuration indicator state. The CSI includes a first measurement result obtained by performing CSI measurement on a CSI-RS resource in the CSI-RS resource set, and the first measurement result includes a first CSI parameter and a second CSI parameter. The first CSI parameter includes a first CRI, a CSI-RS resource indicated by the first CRI is the third CSI-RS resource, and a parameter other than the first CRI in the first CSI parameter is determined on the third CSI-RS resource. The second CSI parameter includes a second CRI, a CSI-RS resource indicated by the second CRI is the first CSI-RS resource group, and a parameter other than the second CRI in the second CSI parameter is determined on the first CSI-RS resource group. In the foregoing design, an optimal result is separately measured based on each CSI-RS resource, and a measurement result of joint measurement on different CSI-RS resources associated with two different transmission configuration indicator states is further included, to prevent interference to transmission between different TRPs. In addition, the measurement result obtained assumed that the two TRPs serve the terminal device simultaneously can better reflect a total channel state between the two TRPs and the terminal device, to improve system performance. The terminal device further measures the CSI on each CSI-RS resource, a channel state between one TRP and the terminal device can be reflected, and a possibility that the terminal device performs scheduling by using a single TRP is improved.

In a possible design, the first CSI-RS resource and the second CSI-RS resource occupy different time units. In the foregoing design, CSI-RS resources associated with different transmission configuration indicator states are located in different time units, so that beam switching time is provided for the terminal device to receive service data on different beams, to improve integrity of the service data received by the terminal device.

In a possible design, the first transmission configuration indicator state includes a quasi co-location type D, or the second transmission configuration indicator state includes a quasi co-location type D. The first CSI-RS resource and the second CSI-RS resource occupy different time units. The quasi co-location type D is used to indicate a receiving analog beam, the first transmission configuration indicator state includes the quasi co-location type D, and/or the second transmission configuration indicator state includes the quasi co-location type D. The terminal device may use different analog beams. Therefore, different CSI-RS resources associated with different transmission configuration indicator states are located in different time units, so that beam switching time is provided for the terminal device to receive service data on different beams, to improve integrity of the service data received by the terminal device.

In a possible design, the first CSI-RS resource and the second CSI-RS resource are not adjacent in time domain. In the foregoing design, CSI-RS resources associated with different transmission configuration indicator states are located in different time units and are not adjacent to each other, so that sufficient beam switching time is further provided for the terminal device to receive service data on different beams, to improve integrity of the service data received by the terminal device.

In a possible design, an interval between a time unit occupied by the first CSI-RS resource and a time unit occupied by the second CSI-RS resource is greater than or equal to a capability parameter reported by the terminal device. In the foregoing design, different CSI-RS resources associated with different transmission configuration indicator states are located in different time units, and a quantity of time units between is greater than or equal to the capability parameter reported by the terminal device, so that sufficient beam switching time is further provided for the terminal device to receive service data on different beams, to improve integrity of the service data received by the terminal device.

In a possible design, the terminal device receives mode indication information from the network device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N. According to the foregoing design, different CSI-RS resources may use a same measurement manner or different measurement manners, to improve flexibility.

In a possible design, a quantity of ports corresponding to the CSI-RS resources included in the first CSI-RS resource group is greater than 16.

In a possible design, the method further includes: The terminal device receives second CSI-RS resource configuration information from the network device. The second CSI-RS resource configuration information includes a CSI-RS resource set, an association relationship exists between a first port group corresponding to a first CSI-RS resource included in the CSI-RS resource set and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group. Before the CSI is measured based on the first resource configuration information, the method further includes: The terminal device receives a configuration indication from the network device. The configuration indication is used to indicate to use a first resource configuration manner, a resource configuration manner for the first CSI-RS resource configuration information is the first resource configuration manner, and a resource configuration manner for the second CSI-RS resource configuration information is a second resource configuration manner. This application provides a plurality of resource configuration manners. The network device can indicate, based on a requirement, a resource configuration manner used by the terminal device, to improve flexibility.

According to a fourth aspect, an embodiment of this application provides a method for reporting channel state information. The method is applied to a communication apparatus. The communication apparatus may be a network device, or a chip or chip system in the network device. For specific beneficial effects, refer to related descriptions of the third aspect and any design of the third aspect. Details are not described herein again. The network device is used as an example. The network device sends first channel state information-reference signal CSI-RS resource configuration information to a terminal device. The first CSI-RS resource configuration information includes a CSI-RS resource set, the CSI-RS resource set includes at least a first CSI-RS resource group, the first CSI-RS resource group includes a first CSI-RS resource and a second CSI-RS resource, an association relationship exists between the first CSI-RS resource and a first transmission configuration indicator state, an association relationship exists between the second CSI-RS resource and a second transmission configuration indicator state, and an association relationship exists between the first CSI-RS resource and the second CSI-RS resource. Further, the network device receives CSI reported by the terminal device. The CSI is obtained by the terminal device by measuring the CSI based on the first CSI-RS resource configuration information.

In a possible design, the CSI resource configuration information further includes a third CSI-RS resource, and the third CSI-RS resource is associated with a third transmission configuration indicator state. The CSI includes a first measurement result obtained by performing CSI measurement on a CSI-RS resource in the CSI-RS resource set, and the first measurement result includes a first CSI parameter and a second CSI parameter. The first CSI parameter includes a first CRI, a CSI-RS resource indicated by the first CRI is the third CSI-RS resource, and a parameter other than the first CRI in the first CSI parameter is determined on the third CSI-RS resource. The second CSI parameter includes a second CRI, a CSI-RS resource indicated by the second CRI is the first CSI-RS resource group, and a parameter other than the second CRI in the second CSI parameter is determined on the first CSI-RS resource group.

In a possible design, the first CSI-RS resource and the second CSI-RS resource occupy different time units.

In a possible design, the first transmission configuration indicator state includes a quasi co-location type D, or the second transmission configuration indicator state includes a quasi co-location type D. The first CSI-RS resource and the second CSI-RS resource occupy different time units.

In a possible design, the first CSI-RS resource and the second CSI-RS resource are not adjacent in time domain.

In a possible design, an interval between a time unit occupied by the first CSI-RS resource and a time unit occupied by the second CSI-RS resource is greater than or equal to a capability parameter reported by the terminal device.

In a possible design, the network device sends mode indication information to the terminal device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N.

In a possible design, a quantity of ports corresponding to the CSI-RS resources included in the first CSI-RS resource group is greater than 16.

In a possible design, the method further includes: The terminal device receives second CSI-RS resource configuration information from the network device. The second CSI-RS resource configuration information includes a CSI-RS resource set, an association relationship exists between a first port group corresponding to a first CSI-RS resource included in the CSI-RS resource set and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group. Before the CSI is measured based on the first resource configuration information, the method further includes: The terminal device receives a configuration indication from the network device. The configuration indication is used to indicate to use a first resource configuration manner, a resource configuration manner for the first CSI-RS resource configuration information is the first resource configuration manner, and a resource configuration manner for the second CSI-RS resource configuration information is a second resource configuration manner.

According to a fifth aspect, an embodiment of this application provides a method for reporting channel state information. The method is applied to a communication apparatus. The communication apparatus may be a terminal device, or a chip or chip system in the terminal device. The terminal device is used as an example. The terminal device receives a CSI reporting configuration group from a network device. The CSI reporting configuration group includes a first CSI reporting configuration and a second CSI reporting configuration, the first CSI reporting configuration and the second CSI reporting configuration are used to configure a CSI reporting manner for the terminal device, the first CSI reporting configuration is associated with a first CSI-RS resource set, the second CSI reporting configuration is associated with a second CSI-RS resource set, an association relationship exists between the first CSI-RS resource set and a first transmission configuration indicator state, an association relationship exists between the second CSI-RS resource set and a second transmission configuration indicator state, a binding relationship exists between the first CSI reporting configuration and the second CSI reporting configuration, and the binding relationship is used to indicate to measure CSI on CSI-RS resource sets respectively associated with two CSI reporting configurations that have a binding relationship.

Further, the terminal device measures CSI based on the CSI reporting configuration group, and reports the CSI to the network device. In the foregoing manner, when performing channel measurement on the CSI-RS resource sets associated with different transmission configuration indicators, the terminal device obtains a result assuming that two TRPs serve the terminal device. This avoids an inaccurate measurement result, and reduces impact on system performance.

In a possible design, the CSI includes a measurement result obtained by performing CSI measurement on the first CSI-RS resource set associated with the first CSI reporting configuration, a measurement result obtained by performing CSI measurement on the second CSI-RS resource set associated with the second CSI reporting configuration, and a measurement result obtained by performing CSI measurement on the first CSI-RS resource set and the second CSI-RS resource set.

In a possible design, the method further includes: The terminal device receives indication information from the network device. The indication information indicates that the binding relationship exists between the first CSI reporting configuration and the second CSI reporting configuration in the CSI reporting configuration group.

In a possible design, the first CSI-RS resource set and the second CSI-RS resource set occupy different time units.

In a possible design, the first transmission configuration indicator state includes a quasi co-location type D, or the second transmission configuration indicator state includes a quasi co-location type D. The first CSI-RS resource set and the second CSI-RS resource set occupy different time units.

In a possible design, the first CSI-RS resource set and the second CSI-RS resource set are not adjacent in time domain.

In a possible design, an interval between a time unit occupied by the first CSI-RS resource set and a time unit occupied by the second CSI-RS resource set is greater than or equal to a capability parameter reported by the terminal device.

According to a sixth aspect, an embodiment of this application provides a method for reporting channel state information. The method is applied to a communication apparatus. The communication apparatus may be a network device, or a chip or chip system in the network device. The network device is used as an example. The network device sends a CSI reporting configuration group to a terminal device. The CSI reporting configuration group includes a first CSI reporting configuration and a second CSI reporting configuration, the first CSI reporting configuration and the second CSI reporting configuration are used to configure a CSI reporting manner for the terminal device, the first CSI reporting configuration is associated with a first CSI-RS resource set, the second CSI reporting configuration is associated with a second CSI-RS resource set, an association relationship exists between the first CSI-RS resource set and a first transmission configuration indicator state, an association relationship exists between the second CSI-RS resource set and a second transmission configuration indicator state, a binding relationship exists between the first CSI reporting configuration and the second CSI reporting configuration, and the binding relationship is used to indicate to measure CSI on CSI-RS resource sets respectively associated with two CSI reporting configurations that have a binding relationship. Further, the terminal device measures CSI based on the CSI reporting configuration group, and reports the CSI to the network device, so that the network device receives the CSI reported by the terminal device.

In a possible design, the CSI includes a measurement result obtained by performing CSI measurement on the first CSI-RS resource set associated with the first CSI reporting configuration, a measurement result obtained by performing CSI measurement on the second CSI-RS resource set associated with the second CSI reporting configuration, and a measurement result obtained by performing CSI measurement on the first CSI-RS resource set and the second CSI-RS resource set.

In a possible design, the method further includes: The network device sends indication information to the terminal device. The indication information indicates that the binding relationship exists between the first CSI reporting configuration and the second CSI reporting configuration in the CSI reporting configuration group.

In a possible design, the first CSI-RS resource set and the second CSI-RS resource set occupy different time units.

In a possible design, the first transmission configuration indicator state includes a quasi co-location type D, or the second transmission configuration indicator state includes a quasi co-location type D. The first CSI-RS resource set and the second CSI-RS resource set occupy different time units.

In a possible design, the first CSI-RS resource set and the second CSI-RS resource set are not adjacent in time domain.

In a possible design, an interval between a time unit occupied by the first CSI-RS resource set and a time unit occupied by the second CSI-RS resource set is greater than or equal to a capability parameter reported by the terminal device.

According to a seventh aspect, this application provides a communication apparatus. The communication apparatus is used in a terminal device or a chip of a terminal device, and includes a unit or means (means) configured to perform the method according to the first aspect or any possible implementation of the first aspect, includes a unit or means configured to perform the method according to the third aspect or any possible implementation of the third aspect, or includes a unit or means configured to perform the method according to the fifth aspect or any possible implementation of the fifth aspect.

According to an eighth aspect, this application provides a communication apparatus. The communication apparatus is used in a network device or a chip of a network device, and includes a unit or means configured to perform the method according to the second aspect or any possible implementation of the second aspect, includes a unit or means configured to perform the method according to the fourth aspect or any possible implementation of the fourth aspect, or includes a unit or means configured to perform the method according to the sixth aspect or any possible implementation of the sixth aspect.

According to a ninth aspect, this application provides a communication apparatus. The communication apparatus is used in a terminal device or a chip of a terminal device, and includes at least one processor element and at least one storage element. The at least one storage element is configured to store a program and data. The at least one processor element is configured to perform the method according to the first aspect or any possible implementation of the first aspect, or configured to perform the method according to the third aspect or any possible implementation of the third aspect, or configured to perform the method according to the fifth aspect or any possible implementation of the fifth aspect.

According to a tenth aspect, this application provides a communication apparatus. The communication apparatus is used in a network device or a chip of a network device, and includes at least one processor element and at least one storage element. The at least one storage element is configured to store a program and data. The at least one processor element is configured to perform the method according to the second aspect or any possible implementation of the second aspect, or configured to perform the method according to the fourth aspect or any possible implementation of the fourth aspect, or configured to perform the method according to the sixth aspect or any possible implementation of the sixth aspect.

According to an eleventh aspect, this application provides a communication apparatus, including a processor and a communication interface. The communication interface is configured to input and/or output a signal, where the signal includes data and/or program instructions. The communication interface can receive a signal from another communication apparatus other than the communication apparatus and transmit the signal to the processor, or send a signal from the processor to another communication apparatus other than the communication apparatus. By using a logic circuit or executing code instructions, the processor is configured to implement the method according to the first aspect or any possible implementation of the first aspect, configured to implement the method according to the third aspect or any possible implementation of the third aspect, or configured to implement the method according to the fifth aspect or any possible implementation of the fifth aspect.

According to a twelfth aspect, this application provides a communication apparatus, including a processor and a communication interface. The communication interface is configured to input and/or output a signal, where the signal includes data and/or program instructions. The communication interface can receive a signal from another communication apparatus other than the communication apparatus and transmit the signal to the processor, or send a signal from the processor to another communication apparatus other than the communication apparatus. By using a logic circuit or executing code instructions, the processor is configured to implement the method according to the second aspect or any possible implementation of the second aspect, configured to implement the method according to the fourth aspect or any possible implementation of the fourth aspect, or configured to implement the method according to the sixth aspect or any possible implementation of the sixth aspect.

According to a thirteenth aspect, this application provides a computer program product. The computer program product includes computer instructions. When the computer instructions are executed, the method according to the first aspect or any possible implementation of the first aspect is performed, the method according to the third aspect or any possible implementation of the third aspect is performed, or the method according to the fifth aspect or any possible implementation of the fifth aspect is performed.

According to a fourteenth aspect, this application provides a computer program product. The computer program product includes computer instructions. When the computer instructions are executed, the method according to the second aspect or any possible implementation of the second aspect is performed, the method according to the fourth aspect or any possible implementation of the fourth aspect is performed, or the method according to the sixth aspect or any possible implementation of the sixth aspect is performed.

According to a fifteenth aspect, this application provides a computer-readable storage medium. The computer-readable storage medium stores computer instructions. When the computer instructions are executed, the method according to the first aspect or any possible implementation of the first aspect is performed, the method according to the third aspect or any possible implementation of the third aspect is performed, or the method according to the fifth aspect or any possible implementation of the fifth aspect is performed.

According to a sixteenth aspect, this application provides a computer-readable storage medium. The computer-readable storage medium stores computer instructions. When the computer instructions are executed, the method according to the second aspect or any possible implementation of the second aspect is performed, the method according to the fourth aspect or any possible implementation of the fourth aspect is performed, or the method according to the sixth aspect or any possible implementation of the sixth aspect is performed.

For descriptions of beneficial effects of the seventh aspect to the sixteenth aspect, refer to the descriptions of the first aspect to the sixth aspect. Details are not described herein again.

## BRIEF DESCRIPTION OF DRAWINGS

FIG. 1 is a schematic diagram of an architecture of a communication system according to an embodiment of this application;

FIG. 2 is a schematic flowchart of a first possible method for reporting channel state information according to an embodiment of this application;

FIG. 3 is a schematic diagram of an architecture of another communication system according to an embodiment of this application;

FIG. 4 is a schematic flowchart of a second possible method for reporting channel state information according to an embodiment of this application;

FIG. 5 is a schematic flowchart of a third possible method for reporting channel state information according to an embodiment of this application;

FIG. 6 is a schematic diagram of a structure of a communication apparatus 600 according to an embodiment of this application;

FIG. 7 is a schematic diagram of a structure of a communication apparatus 700 according to an embodiment of this application; and

FIG. 8 is a schematic diagram of a structure of a communication apparatus 800 according to an embodiment of this application.

## DESCRIPTION OF EMBODIMENTS

The following describes the technical solutions in embodiments of this application with reference to the accompanying drawings in embodiments of this application.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G mobile communication system, or a new radio access technology (new radio Access Technology, NR). The 5G mobile communication system may include a non-standalone (non-standalone, NSA) communication system and/or a standalone (standalone, SA) communication system.

The technical solutions provided in this application may also be applied to machine type communication (machine type communication, MTC), a long term evolution-machine (Long Term Evolution-machine, LTE-M) communication technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to another device (vehicle to X, V2X, where X may represent anything). For example, V2X may include vehicle to vehicle (vehicle to vehicle. V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a sixth generation mobile communication system. This is not limited in this application.

It should be understood that "an embodiment", "an implementation", or "an example" mentioned in the entire specification means that particular features, structures, or characteristics related to embodiments are included in at least one embodiment of this application. Therefore, "in an embodiment", "in an implementation", or "in an example" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined based on functions and internal logic of the processes, but should not be construed as any limitation on implementation processes in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In this specification, the symbol " $\lfloor X \rfloor$ " represents an operation of rounding down X, or may be represented as floor (X); and the symbol " $\lceil Y \rceil$ " represents an operation of rounding up Y, or may be represented as ceiling (Y). In addition, the character "/" in this specification generally indicates an "or" relationship between the associated objects. The term "at least one" in this application means one or more, that is, includes one, two, three, or more; and the term "a plurality of" means two or more, that is, includes two, three, or more. In addition, it should be understood that in description of this application, terms such as "first" and "second" are merely used for distinguishing and description, but should not be understood as indicating or implying relative importance, or should not be understood as indicating or implying a sequence. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural. It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. In this application, "being used to indicate" may include "being used to directly indicate" and "being used to indirectly indicate". When it is described that a piece of indication information indicates A, this may include that the indication information may directly indicate A or indirectly indicate A, but does not represent that the indication information necessarily carries A. In addition, the terms "include" and "have" in embodiments, claims, and accompanying drawings of this application are not exclusive. For example, a process, a method, a system, a product, or a device that includes a series of steps or modules is not limited to the listed steps or modules, and may further include steps or modules that are not listed.

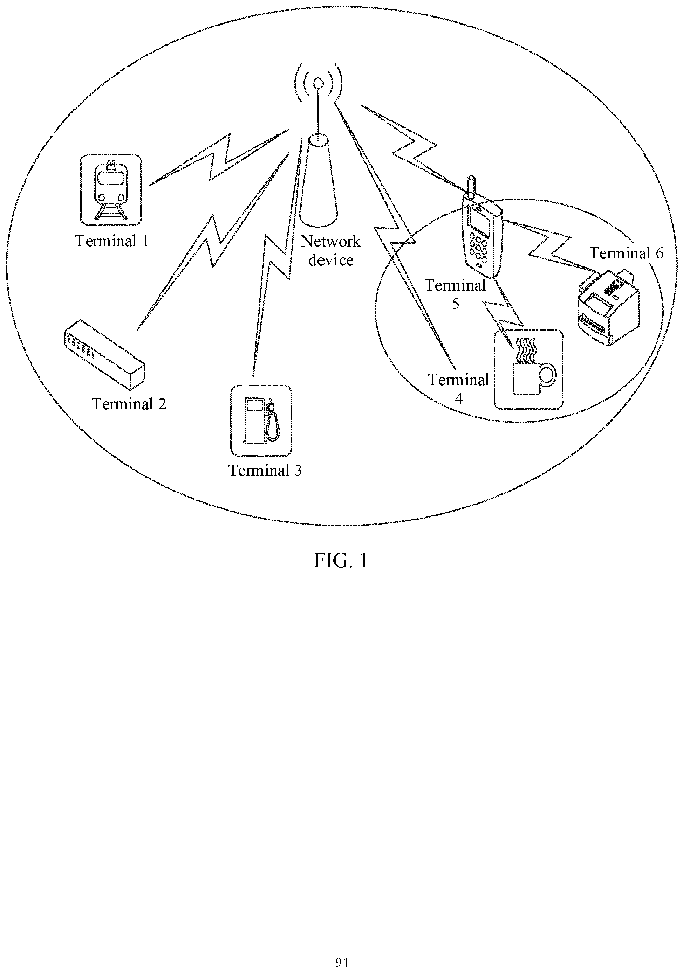

FIG. 1 shows a communication system 100 according to an embodiment of this application. The communication system 100 may include a network device and a terminal device. Quantities of network devices and terminal devices included in the communication system are not limited in this embodiment of this application. For example, as shown in FIG. 1, six terminal devices are included, which are respectively a terminal device 1 to a terminal device 6. FIG. 1 is merely a schematic diagram. The communication system may further include another network device, for example, may further include a core network device, a wireless repeater device, and a wireless backhaul device, which are not drawn in FIG. 1. The network device may provide a radio access-related service for the terminal device, to implement one or more of the following functions: a radio physical layer function, resource scheduling and radio resource management, quality of service (quality of service, QoS) management, radio access control, and mobility management functions. The terminal device may communicate with the network device through an air interface.

The network device is an access device that is used by the terminal device to access the mobile communication system wirelessly, and may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. The network device may alternatively be a module or a unit that completes some functions of a base station, for example, may be a central unit (central unit, CU), or may be a distributed unit (distributed unit, DU). A specific technology and a specific device form that are used by the network device are not limited in this embodiment of this application.

The terminal device may also be referred to as a terminal Terminal, user equipment (user equipment, UE), a mobile station (mobile station, MS), a mobile terminal (mobile terminal, MT), or the like. The terminal device may be a mobile phone (mobile phone), a tablet computer (pad), a computer with a wireless receiving and sending function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in this embodiment of this application.

The network device and the terminal device may be deployed on the land, including an indoor device, an outdoor device, a handheld device, or a vehicle-mounted device; may be deployed on the water surface; or may be deployed on a plane, a balloon, and a satellite in the air. An application scenario of the network device and the terminal device is not limited in this embodiment of this application.

The network device and the terminal device may communicate with each other by using a licensed spectrum (licensed spectrum), may communicate with each other by using an unlicensed spectrum (unlicensed spectrum), or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in this embodiment of this application.

The system architecture and the service scenario described in this embodiment of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes technical concepts in embodiments of this application.

1) Multi-DCI-based TRP transmission scheme, which may be referred to as mDCI mTRP for short.

The multi-DCI-based scheme is as follows: Each of two TRPs sends one piece of DCI. Specifically, the two TRPs separately sends the DCI to a same terminal device. Different TRPs schedule different PDSCHs, and send different service data to the same terminal device. DCI is control information that is used by a network device to indicate behavior of a terminal device at a physical layer (physical layer). In addition, the terminal device further receives, from the network device, higher layer signaling used to indicate behavior of the terminal device. The higher layer signaling is indication information that is of a layer higher than a physical layer and that is used to control and manage a related terminal device, for example, radio resource control (radio resource control, RRC) signaling. The network device configures control channel resource configuration information for the terminal device, where the control channel resource configuration information includes a control resource set (control resource set, CORESET) and a control resource set (control resource set, CORESET) pool index (CORESET pool index). The CORESET pool index is used to indicate a control resource set pool to which a CORESET belongs. A physical layer downlink control channel (physical downlink control channel, PDCCH) carrying DCI is sent on a downlink control resource associated with the CORESET.

If CORESET pool indexes are different, TRPs that use the PDCCH in the CORESET to send the DCI are different. In other words, the CORESET pool index in the control channel resource configuration information can be used to distinguish between different TRPs. For example, when CORESET pool indexes in control channel resource configuration information corresponding to two pieces of DCI are different, the two pieces of DCI are from different TRPs. It should be noted that, although both PDSCHs scheduled by using the two pieces of DCI are sent to a same terminal device, when the two TRPs respectively send service data by using the scheduled PDSCHs, the two PDSCHs interfere with each other due to non-ideality of a transmit parameter. For example, the network device respectively sends a PDSCH 1 to the terminal device by using a TRP 1 and sends a PDSCH 2 to the same terminal device by using a TRP 2. When the PDSCH 1 and the PDSCH 2 overlap in time and frequency, on an overlapping resource, the PDSCH 1 causes strong interference to receiving of the PDSCH 2, and the PDSCH 2 also causes strong interference to receiving of the PDSCH 1.

2) Single-DCI-based TRP transmission scheme

The single-DCI-based scheme is as follows: Two TRPs send one piece of DCI to a terminal device, to schedule a PDSCH to send service data to the terminal device. However, some layers or some DMRS (demodulation reference signal) ports on the PDSCH are occupied by one TRP, and the other layers or DMRS ports are occupied by the other TRP. Because the layers or DMRS ports of the PDSCH are occupied by different TRPs, time-frequency offsets at which signals from different TRPs arrive the terminal device are different. To compensate for the different time-frequency offsets, it is specified in an NR protocol that in a single-DCI multi-TRP transmission mode, a network device configures, for a terminal device by using higher layer signaling, an association relationship between one code point of field transmission configuration indication (Transmission configuration indication, TCI) in DCI and two different TCI states (TCI states), the network device may simultaneously indicate two different TCI states to the terminal device by using the field TCI in the DCI. Each TCI state may be used to configure a quasi co-location (quasi co-location, QCL) relationship between a group of DMRS ports of a PDSCH and another downlink reference signal. However, in a single-TRP mode, one code point of the field TCI in the DCI is associated with only one TCI state.

It should be noted that, a channel characteristic on a symbol of a DMRS port may be derived from another DMRS port. In this case, it is considered that a QCL relationship exists between the two DMRS ports, and a channel estimation result obtained from one DMRS port may be used by the other DMRS port.

In addition, single-DCI based multi-TRP transmission may be further used to enhance reliability of signal transmission. In the NR Rel-16 protocol, three schemes: (1) space division multiplexing based (space division multiplexing based, SDM-based) single DCI, frequency division multiplexing based (frequency division multiplexing based, FDM-based) single DCI, and time division multiplexing based (time division multiplexing based, TDM-based) single DCI are introduced to implement reliable transmission of an enhanced signal.

(1) Single-DCI based SDM scheme (single-DCI based SDM scheme), which may be referred to as a scheme 1A or scheme 1a for short.

Two TRPs send different streams on a same PDSCH to a same terminal device on a same time-frequency resource. In one aspect, a same signal is transmitted based on space division multiplexing and distributed on a plurality of spatially isolated streams, so that a bit rate can be reduced. In another aspect, because a signal is transmitted to a same terminal device from two physically separated TRPs, a space diversity gain can be obtained. Therefore, the reliability of signal transmission can be effectively improved. However, due to non-ideal signal transmission, the different streams interfere with each other.

(2) Single-DCI based FDM scheme A (single-DCI based FDM scheme A), which may be referred to as a scheme 2A or scheme 2a for short.

Two TRPs send a same PDSCH to a same terminal device on different frequency domain resources. Specifically, a same redundancy version of a same codeword is mapped to the different frequency domain resources, and the different TRPs send same DCI to the terminal device by using the different frequency domain resources. From a perspective of receiving by the terminal device, this is similar to a common PDSCH sent based on a single TRP. A difference lies in that, for the common PDSCH sent based on the single TRP, at a same moment, an entire-allocated frequency domain resource of the PDSCH is associated with only one TCI state. However, in a single-DCI based FDM scheme, the entire-allocated frequency domain resource of the PDSCH is divided into two parts, and each part of the frequency domain resource is associated with one different TCI state.

(3) Single-DCI based FDM scheme B (single-DCI based FDM scheme B), which may be referred to as a scheme 2B or scheme 2b for short.

This is similar to the single-DCI based FDM scheme A. Two TRPs send a same PDSCH to a same terminal device on different frequency domain resources. A difference lies in that different redundancy versions of a same codeword are mapped to the different frequency domain resources. It should be noted that: Each redundancy version may be independently decoded to obtain a transport block. The two different redundancy versions are sent to the terminal device by different TRPs on different frequency domain resources. The terminal device receives signals from the different TRPs on corresponding frequency domain resources, and the different frequency domain resources corresponding to the different TRPs are associated with different TCI states.

(4) Single-DCI based TDM scheme A (single-DCI based TDM scheme A), which may be referred to as a scheme 3 for short.

Two TRPs send a same PDSCH to a same terminal device on different time domain resources. Specifically, different redundancy versions of a same codeword are mapped to two different time domain resources in a same slot (slot) (each time domain resource in one slot includes n consecutive symbols, and a quantity and a location of n are configured by a network device), and the two TRPs send the different redundancy versions of the same codeword to the terminal device by using the different time domain resources in the same slot. The two different time domain resources in the same slot are associated with different TCI states. There are K symbols between the two time domain resources in the same slot, and K is configured by the network device, to ensure that there is sufficient configuration preparation time after the terminal device receives a signal from one TRP and before the terminal device continues to receive a signal from the other TRP.

(5) Single-DCI based TDM scheme B (single-DCI based TDM scheme B), which may be referred to as a scheme 4 for short.

Two TRPs send a same PDSCH to a same terminal device on different time domain resources. Specifically, different redundancy versions of a same codeword are mapped to different slots (slots), and the two TRPs send the different redundancy versions of the same codeword to the terminal device by using the different slots. Resources of the different slots are associated with different TCI states.

3) CSI measurement and reporting

CSI reporting manners may include periodic CSI reporting (periodic CSI reporting, P-CSI), semi-persistent CSI reporting (semi-persistent CSI reporting, SP-CSI), and aperiodic CSI reporting (aperiodic CSI reporting, AP-CSI).

(1) A process for periodic CSI reporting includes: A network device configures, by using higher layer signaling (for example, RRC signaling), a terminal device to periodically report CSI, and the terminal device performs channel measurement and interference measurement based on a periodic CSI-RS resource, and reports the CSI on a physical uplink control channel (physical uplink control channel, PUCCH) at a fixed time interval. In periodic CSI reporting, both a channel measurement resource (channel measurement resource, CMR) and an interference measurement resource (interference measurement resource, IMR) used for measurement are periodic. A specific period and a specific related parameter such as resource mapping may be configured by the network device for the terminal device by using RRC signaling. In addition, parameters such as a CSI reporting period and a PUCCH resource used for reporting are also configured by the network device for the terminal device by using RRC signaling.

(2) A process for semi-persistent CSI reporting includes: When a terminal device is configured to use semi-persistent CSI reporting, the terminal device starts CSI reporting only when receiving downlink signaling sent by a network to indicate to start CSI reporting, and stops CSI reporting only after receiving downlink signaling to indicate to stop CSI reporting. The terminal device performs periodic CSI measurement and reporting between moments of delivering the two downlink signaling. A CMR and an IMR used for semi-persistent CSI reporting may be periodic or semi-persistent. When using semi-persistent CSI reporting, the terminal device may perform reporting on a PUCCH resource, and a network device may activate and deactivate semi-persistent CSI reporting by using downlink higher layer signaling (for example, MAC CE signaling). When using semi-persistent CSI reporting, the terminal device may further perform reporting on a physical uplink shared channel (physical uplink shared channel, PUSCH)) resource, and a network device may activate and deactivate semi-persistent CSI reporting by using downlink control signaling (downlink control information, DCI) at a physical layer. Regardless of whether SP CSI measurement on a PUCCH or SP CSI measurement on the PUSCH is used, measurement parameters such as a measurement quantity and a measurement bandwidth may be configured by the network device for the terminal device by using RRC signaling.

(3) Aperiodic CSI reporting

A process for aperiodic CSI reporting and measurement includes:

A network device first semi-statically configures a plurality of CSI reporting (reporting) configuration parameters for a terminal device by using downlink RRC signaling. For example, the network device triggers one or more CSI reporting configuration parameters to the terminal device by using DCI, and the terminal device measures CSI based on the CSI reporting configuration parameter, and reports a CSI measurement result by using a PUSCH resource. It should be noted that, although both aperiodic CSI reporting and semi-persistent CSI reporting need to be triggered by the network device, aperiodic CSI reporting does not need to be deactivated after CSI measurement and reporting are activated by using DCI, and measurement and reporting are performed only once. A CMR and an IMR used for aperiodic CSI reporting may be periodic, semi-persistent, or aperiodic.

It should be noted that, in the foregoing three CSI reporting solutions, a configuration parameter required in a CSI reporting process may be configured by a network device for a terminal device by using RRC signaling. For example, the configuration parameter may include a reporting quantity, a reporting bandwidth, and the like. The reporting quantity may include one or more of a rank indicator (rank indicator, RI), a channel quality indicator (channel quality indicator, CQI), a precoding matrix indicator (precoding matrix indicator, PMI), or the like. In an NR system, a network device may complete different measurement requirements and assumed sending modes by using a CSI measurement configuration parameter.

The network device may configure a CSI resource configuration parameter for the terminal device by using higher layer signaling such as RRC signaling, to indicate, to the terminal device, a resource used for measurement and reporting. For example, the resource used for measurement and reporting may be configured for the terminal device by using a field csi-resourceConfig in the RRC signaling. The CSI resource configuration parameter may include one to three CSI-RS resource settings (CSI-RS resource settings).

In an example, when the CSI resource configuration parameter includes one CSI-RS resource setting, the CSI-RS resource setting is used to implement beam measurement, that is, is used to calculate layer 1 reference signal received power (Layer 1 Reference Signal Received Power, L1-RSRP).

In another example, when the CSI resource configuration parameter includes two CSI-RS resource settings, one CSI-RS resource setting includes a group of non-zero power channel state information-reference signal resource sets (Non-Zero Power Channel State Information-Reference Signal resource sets, NZP CSI-RS resource sets). The NZP CSI-RS resource sets may be configured by using a higher-layer parameter NZP-CSI-RS-ResourceSet. The network device may indicate, to the terminal device, an NZP CSI-RS resource set used for channel measurement in the group of NZP CSI-RS resource sets, so that the terminal device performs channel measurement based on the NZP CSI-RS resource set indicated by the network device. The other CSI-RS resource setting includes one NZP CSI-RS resource set or one CSI interference measurement (CSI-Interference_Measurement, CSI-IM) resource set. Further, the terminal device performs interference measurement on the NZP CSI-RS resource set or the CSI-IM resource set. The CSI-IM resource set may be configured by the network device for the terminal device by using a higher-layer parameter CSI-IM-ResourceSet.

It should be noted that, the NZP CSI-RS resource set used for channel measurement that is indicated by the network device and that is in the CSI-RS resource setting may include n NZP CSI-RS resources. When interference measurement is based on an NZP CSI-RS, n=1; when interference measurement is based on CSI-IM, $n \geq 1$, and n is an integer. When $n \geq 1$, the CSI-IM resource set also includes a same quantity of CSI-IM resources, and the CSI-IM resources are in a one-to-one correspondence with the n NZP CSI-RS resources in the NZP CSI-RS resource set. The terminal device selects one NZP CSI-RS resource from the n NZP CSI-RS resources, for example, the $X^{th}$ NZP CSI-RS resource, and measures and reports a CSI measurement result on the NZP CSI-RS resource and a corresponding CSI-IM resource. Content in the CSI measurement result includes a reporting quantity indicated by the network device by using higher layer signaling (reportQuantity, included in a CSI reporting configuration parameter CSI-ReportConfig). When reporting the CSI measurement result, the terminal device reports an indicator (CSI-RS resource indicator, CRI) of the NZP CSI-RS resource corresponding to the CSI measurement result, that is, the indicator is used to indicate X.

In still another example, when the CSI resource configuration parameter includes three CSI-RS resource settings, a first CSI-RS resource setting includes a group of NZP CSI-RS resource sets. The network device may indicate, to the terminal device, an NZP CSI-RS resource set used for channel measurement in the group of NZP CSI-RS resource sets, so that the terminal device performs channel measurement based on the NZP CSI-RS resource set indicated by the network device. A second CSI-RS resource setting includes a group of NZP CSI-RS resource sets. A third CSI-RS resource setting includes one CSI-IM resource set. The terminal device performs interference measurement based on the second resource and the third resource. A difference lies in that the terminal device measures inter-user interference based on the NZP CSI-RS resource set included in the second CSI-RS resource setting, and measures inter-cell interference based on the CSI-IM resource set included in the third CSI-RS resource setting.

4) CSI-RS configuration

In an NR system, channel measurement is performed on an NZP CSI-RS resource setting. A time-domain sending behavior of an NZP CSI-RS may be periodic (periodic CSI-RS, P-CSI-RS), semi-persistent (semi-persistent CSI-RS, SP-CSI-RS), or aperiodic (aperiodic CSI-RS, AP-CSI-RS). For each CSI reporting, one CSI-RS resource setting may be configured for channel measurement. A type (P/SP/AP-CSI-RS) is configured for the CSI-RS resource setting, and the type is used to indicate a time-domain sending behavior. Each CSI-RS resource setting may include m CSI-RS resource sets. When the type of the CSI-RS resource setting is P/SP-CSI-RS, m=1. When the type of the CSI-RS resource setting is AP-CSI-RS, m ≥ 1. When m ≥ 1, for a specific CSI measurement and reporting, a network device selects one CSI-RS resource set from the m ≥ 1 CSI-RS resource sets for the terminal device to associate with the specific CSI measurement and reporting.

It should be noted that when interference measurement is performed on the NZP CSI-RS resource setting instead of a CSI-IM resource setting, the network device configures three CSI-RS resource settings or two CSI-RS resource settings for the terminal device. A first CSI-RS resource setting is used for channel measurement, a second CSI-RS resource setting is used for interference measurement. The second CSI-RS resource setting includes a group of CSI-IM resource sets, and a maximum of one NZP CSI-RS resource can be configured in a CSI-RS resource set used for channel measurement. When interference measurement is performed in the CSI-IM resource set, n ≥ 1 NZP CSI-RS resources may be configured in the CSI-RS resource set used for channel measurement.

Interference measured based on the NZP CSI-RS belongs to multi-user interference, that is, mutual interference generated, due to non-ideality of a transmit parameter, between a plurality of terminal devices that are simultaneously scheduled on a same time-frequency resource. Interference measured based on CSI-IM belongs to inter-cell interference. Therefore, when the multi-user interference is measured, the network device always uses one NZP CSI-RS resource set for channel measurement, and measures interference from another terminal device on a plurality of NZP CSI-RS resource sets. If there are a plurality of NZP CSI-RS resources in the NZP CSI-RS resource set used for channel measurement, there is high complexity in associating these NZP CSI-RS resources with an NZP CSI-RS resource used for interference measurement to measure CSI. However, when the interference is measured based on the CSI-IM, one CSI-RS resource set may include n ≥ 1 NZP CSI-RS resources, and one transmission configuration indicator state (transmission configuration indicator state, TCI state) may be independently configured for these different NZP CSI-RS resources, and each TCI state includes quasi co-location information (quasi co-location-info, QCL-Info). The QCL-Info is used to notify the terminal device that an NZP CSI-RS carried on a current NZP CSI-RS resource and a reference signal are of QCL, and notify the terminal device of a QCL type. The terminal device may receive the NZP CSI-RS and perform channel estimation by using a channel estimation result of a reference signal configured in the QCL-Info. Specific parameters that can be used for receiving the NZP CSI-RS and performing channel estimation are determined by a QCL type included in the QCL-Info configured by the network device.

Currently, the NR system includes four QCL types, as shown in Table 1.

Table 1

| Type | Feature | Function |
|---|---|---|
| QCL-Type A | Doppler shift (Doppler shift), Doppler spread (Doppler spread), average delay (average delay), and delay spread (delay spread) | Obtain channel estimation information |
| QCL-Type B | Doppler shift (Doppler shift) and Doppler spread (Doppler spread) | Obtain channel estimation information |
| QCL-Type C | Doppler shift (Doppler shift) and average delay (average delay) | Obtain measurement information such as an RSRP |

(continued)

| Type | Feature | Function |
|------|---------|----------|
| QCL-Type D | Spatial Rx parameter (Spatial Rx parameter) | Assist a terminal device in beamforming |

It can be learned from the foregoing descriptions of CSI measurement and reporting and CSI-RS configuration that: Currently, CSI measurement and reporting is designed for the single-TRP transmission mode. Specifically, when the interference is measured based on the CSI-IM, $n \geq 1$ NZP CSI-RS resources may be configured in the CSI-RS resource set used for channel measurement, and independent TCI states may be configured for the $n \geq 1$ NZP CSI-RS resources. In other words, these NZP CSI-RS resources may be associated with different TRPs. However, when the terminal device reports the CSI, the terminal device selects one NZP CSI-RS resource from the $n \geq 1$ NZP CSI-RS resource sets, and reports, to the network device, a CSI measurement result obtained through measurement on the selected NZP CSI-RS resource and a CSI-IM resource associated with the selected NZP CSI-RS resource. It may be understood that the reported CSI measurement result is a measurement result obtained when a TRP associated with the selected NZP CSI-RS resource independently serves the terminal device.

In a multi-TRP transmission mode, at least two TRPs serve the terminal device. In a multi-DCI multi-TRP transmission mode, the network device sends two pieces of DCI to the terminal device by using two TRPs. The network device configures different CSI reporting configuration information for two different TRPs, and the terminal device reports two corresponding CSI measurement results based on the CSI reporting configuration information, to support the network device in performing multi-DCI multi-TRP scheduling. However, due to non-ideality of channel transmission, when the network device separately schedules, based on the two CSI measurement results that are separately measured and reported by the terminal device and that are corresponding to the different TRPs, two PDSCHs by using the two pieces of DCI, there may be an overlapping area between the two PDSCHs on a time-frequency resource. In this case, the two PDSCHs interfere with each other, and the two PDSCHs need to be sent to a same terminal device. Consequently, the interference is large and cannot be ignored. However, in a measurement process, because the two pieces of CSI reporting configuration information corresponding to the different TRPs are independently configured, and there is no association relationship, the foregoing interference between the PDSCHs is not considered in CSI measurement. Therefore, there is a deviation between measurement and actual sending, and system performance deteriorates.

In the single-DCI multi-TRP transmission mode, the network device sends one piece of DCI to the terminal device to schedule a PDSCH. PDSCH resources scheduled by different TRPs are different, and the PDSCH resources scheduled by the different TRPs may be distinguished by using space domain, frequency domain, or time domain. Regardless of whether the PDSCH resources are distinguished, the network device indicates only one MCS (modulation and coding scheme, MCS) to the terminal device, and the MCS is determined based on a CQI in a CSI measurement result reported by the terminal device.

However, based on current CSI measurement, only channel states between two TRPs and the terminal device can be independently measured, and two CSI measurement results are independently reported. CQIs included in the two CSI measurement results are obtained through estimation based on an assumption that the TRPs independently serve the terminal device. The network device needs to obtain, through conversion based on the two CSI measurement results reported by the terminal device, channel state statuses when the two TRPs simultaneously serve the terminal device, and then determine an MCS used in case of multi-TRP transmission. However, the foregoing conversion process cannot reflect an actual channel state between the two TRPs and the terminal device. Therefore, the MCS and another scheduling parameter that are finally determined based on a conversion result affect system performance.

Based on this, embodiments of this application provide a method for reporting channel state information and an apparatus, to resolve a problem that system performance deteriorates. Specifically, embodiments of this application provide but are not limited to the following three possible implementations.

In a first possible implementation, different port groups that belong to a same CSI-RS resource in a CSI-RS resource set and that are configured for a terminal device are associated with different TCI states, that is, different port groups that belong to a same CSI-RS resource and that are configured for a terminal device are associated with different TRPs.

In a second possible implementation, different CSI-RS resources that belong to a same CSI-RS resource group and that are configured for a terminal device are associated with different TCI states, that is, different CSI-RS resources that belong to a same CSI-RS resource group and that are configured for a terminal device are associated with different TRPs.

In a third possible implementation, different CSI reporting configurations (CSI-ReportConfig) configured for a terminal device are associated with different TRPs.

The following describes the first possible implementation in detail below with reference to a specific embodiment.

Refer to FIG. 2.

S201: A network device sends CSI-RS resource configuration information to the terminal device.

The CSI-RS resource configuration information includes one or more CSI-RS resources. The one or more CSI-RS resources belong to one or more CSI-RS resource sets, that is, the CSI-RS resource set may include one or more CSI-RS resources. Quantities of CSI-RS resources included in different CSI-RS resource sets may be the same or may be different. This is not specifically limited in this embodiment of this application. One CSI-RS resource is associated with n TCI states, where n is an integer greater than or equal to 2. It should be noted that different CSI-RS resources may be associated with a same quantity of TCI states or different quantities of TCI states.

A first CSI-RS resource in a CSI-RS resource set is associated with two TCI states. For ease of description, for example, the two TCI states are respectively referred to as a first TCI state and a second TCI state. An association relationship exists between each of a plurality of port groups corresponding to the first CSI-RS resource and the first TCI state or the second TCI state. There is an association relationship between a first port group in the first CSI-RS resource and the first TCI state, and there is an association relationship between a second port group in the first CSI-RS resource and the second TCI state. The first port group and the second port group are different port groups. In other words, a port included in the first port group is different from a port included in the second port group, or an identifier of a port included in the first port group is different from an identifier of a port included in the second port group. The identifier of the port may be a port number of the port, or an index value of the port, or an offset value of the port in the port group. For example, in NR, a port group may be a code division multiple access (code division multiplexing, CDM) group. A port $p$ may be represented by using the following formula (1):

$$p = 3000 + s + jL; \text{ Formula (1)},$$

where

$$j = 0,1,\cdots\frac{N}{L} - 1, \ s = 0,1,\cdots L - 1;,$$

s represents an offset value of a port in a CDM group, j represents an index value of the CDM group, $L$ represents a size of the CDM group, and $N$ represents a total quantity of ports of a CSI-RS. $N$ is configured by the network device, and $L$ is determined by a CSI-RS resource configuration parameter configured by the network device.

In a possible implementation, the port groups corresponding to the first CSI-RS resource may be divided. For example, the port group is a CDM group. For example, one or more port groups that are associated with the first TCI state and that are included in the first CSI-RS resource are referred to as a first CDM group set. One or more port groups that are associated with the second TCI state and that are included in the first CSI-RS resource are referred to as a second CDM group set. The first CDM group set includes one or more CDM groups including the first port group. The second CDM group set includes one or more CDM groups including the second CDM group. An association relationship exists between the first CDM group set and the first TCI state, and an association relationship exists between the second CDM group set and the second TCI state. The CDM group included in the first CDM group set and the CDM group included in the second CDM group set do not overlap, or an identifier of the CDM group in the first CDM group set is different from an identifier of the CDM group in the second CDM group set. The identifier of the CDM group may be an index value of the CDM group, or a different offset value relative to a fixed value, or a port number of a port included in the CDM group, or another identifier indicating the CDM, which is applicable to this application. A quantity of CDM groups associated with the first TCI state in the first CSI-RS resource may be the same as a quantity of CDM groups associated with the second TCI state, to reduce complexity of processing by the terminal device.

In an example, the identifier of the CDM group in the first CDM group set and the identifier of the CDM group in the second CDM group set may be determined by using the CSI-RS resource configuration information, and the CSI-RS resource included in the CSI-RS resource configuration information may meet a configuration corresponding to any row (ROW) in Table 1.

**Table 1**

| Row (Row) | Port (Port) $X$ | Density (Density) $\rho$ | CMD type (CDM type) | $(\bar{k},\bar{l})$ | CDM group index (CDM group index) $j$ | $k'$ | $l'$ |
|---|---|---|---|---|---|---|---|
| 1 | 1 | 3 | noCDM | $(k_0, l_0)$, $(k_0 + 4, l_0)$, $(k_0 + 8, l_0)$ | 0,0,0 | 0 | 0 |
| 2 | 1 | 1, 0.5 | noCDM | $(k_0, l_0)$, | 0 | 0 | 0 |
| 3 | 2 | 1, 0.5 | FD-CDM2 | $(k_0, l_0)$, | 0 | 0, 1 | 0 |

(continued)

| Row (Row) | Port (Port) $X$ | Density (Density) $\rho$ | CMD type (CDM type) | $(\bar{k},\bar{l})$ | CDM group index (CDM group index) $j$ | $k'$ | $l'$ |
|---|---|---|---|---|---|---|---|
| 4 | 4 | 1 | FD-CDM2 | $(k_0, l_0), (k_0 + 2, l_0)$ | 0,1 | 0, 1 | 0 |
| 5 | 4 | 1 | FD-CDM2 | $(k_0, l_0), (k_0, l_0 + 1)$ | 0,1 | 0, 1 | 0 |
| 6 | 8 | 1 | FD-CDM2 | $(k_0, l_0), (k_1, l_0), (k_2, l_0), (k_3, l_0)$ | 0,1,2,3 | 0, 1 | 0 |
| 7 | 8 | 1 | FD-CDM2 | $(k_0, l_0), (k_1, l_0), (k_0, l_0 + 1), (k_1, l_0 + 1)$ | 0,1,2,3 | 0, 1 | 0 |
| 8 | 8 | 1 | CDM4-FD2-TD2 | $(k_0, l_0), (k_1, l_0)$ | 0,1 | 0, 1 | 0, 1 |
| 9 | 12 | 1 | FD-CDM2 | $(k_0, l_0), (k_1, l_0), (k_2, l_0), (k_3, l_0), (k_4, l_0), (k_3, l_0)$ | 0,1,2,3,4,5 | 0, 1 | 0 |
| 10 | 12 | 1 | CDM4-FD2-TD2 | $(k_0, l_0), (k_1, l_0), (k_2, l_0)$ | 0,1,2 | 0, 1 | 0, 1 |
| 11 | 16 | 1, 0.5 | FD-CDM2 | $(k_0, l_0), (k_1, l_0), (k_2, l_0), (k_3, l_0), (k_0, l_0 + 1), (k_1, l_0 + 1), (k_2, l_0 + 1), (k_3, l_0 + 1)$ | 0,1,2,3 4,5,6,7 | 0, 1 | 0 |
| 12 | 16 | 1, 0.5 | CDM4-FD2-TD2 | $(k_0, l_0), (k_1, l_0), (k_2, l_0), (k_3, l_0)$ | 0,1,2,3 | 0, 1 | 0, 1 |
| 13 | 24 | 1, 0.5 | FD-CDM2 | $(k_0, l_0), (k_1, l_0), (k_2, l_0), (k_0, l_0 + 1), (k_1, l_0 + 1), (k_2, l_0 + 1), (k_0, l_1), (k_1, l_1), (k_2, l_1), (k_0, l_1 + 1), (k_1, l_1 + 1), (k_2, l_1 + 1)$ | 0,1,2,3,4,5 6,7,8, 9,10,11 | 0, 1 | 0 |
| 14 | 24 | 1, 0.5 | CDM4-FD2-TD2 | $(k_0, l_0), (k_1, l_0), (k_2, l_0), (k_0, l_1), (k_1, l_1), (k_2, l_1)$ | 0,1,2,3,4,5 | 0, 1 | 0, 1 |
| 15 | 24 | 1, 0.5 | CDM8-FD2-TD4 | $(k_0, l_0), (k_1, l_0), (k_2, l_0)$ | 0,1,2 | 0, 1 | 0, 1, 2, 3 |
| 16 | 32 | 1, 0.5 | FD-CDM2 | $(k_0, l_0), (k_1, l_0), (k_2, l_0), (k_3, l_0), (k_0, l_0 + 1), (k_1, l_0 + 1), (k_2, l_0 + 1), (k_3, l_0 + 1), (k_0, l_0), (k_1, l_1), (k_2, l_1), (k_3, l_1), (k_0, l_1 + 1), (k_1, l_1 + 1), (k_2, l_1 + 1), (k_3, l_1 + 1)$ | 0,1,2,3 4,5,6,7 8,9,10,11 12,13,14,15 | 0, 1 | 0 |
| 17 | 32 | 1, 0.5 | CDM4-FD2-TD2 | $(k_0, l_0), (k_1, l_0), (k_2, l_0), (k_3, l_0), (k_0, l_1), (k_1, l_0), (k_2, l_0), (k_3, l_1)$ | 0,1,2,3,4,5,6, 7 | 0, 1 | 0, 1 |
| 18 | 32 | 1, 0.5 | CDM8-FD2-TD4 | $(k_0, l_0), (k_1, l_0), (k_2, l_0), (k_3, l_0)$ | 0,1,2,3 | 0,1 | 0,1,2 ,3 |

It can be learned from Table 1 that different ports of the CSI-RS in the NR are multiplexed on a same time-frequency resource in a code division multiple access (CDM) manner. In the foregoing configurations, the CDM type is configured by the network device for the terminal device by using a downlink parameter. CDM$N$-FD$N_1$-TD$N_2$ represents that a total length of code division multiple access is N. A length of code division multiple access in frequency domain is $N_1$, and a length of code division multiple access in time domain is $N_2$. $N = N_1 \times N_2$. $k_i$ represents a start position of a CSI-RS resource in frequency domain, where i=0, 1, 2, 3. $l_0$ and $l_1$ represent start locations of a CSI-RS resource in time domain, and are configured by the network device. k' represents an offset value of time-frequency resources used by different ports in a same CDM group in frequency domain. $l'$ represents an offset value of time-frequency resources used by different ports in a same CDM group in time domain. FD-CDM2 represents that code division multiplexing is performed only in frequency domain, and a total length of code division multiple access is 2. noCDM represents that code division multiplexing is not performed.

In an example, when the network device configures an association relationship between a port group of each CSI-RS resource in a CSI-RS resource set and a TCI state, the port groups corresponding to the CSI-RS resources in the CSI-RS resource set may be divided in any one of the following manners.

In a first manner, when a quantity of CDM groups included in the first CSI-RS resource is greater than 1, ports included in a first half of CDM groups in the first CSI-RS resource are associated with a first TCI state, and ports included in a second half of CDM groups in the first CSI-RS resource are associated with a second TCI state. A quantity of ports included in the first half of the CDM groups is the same as a quantity of ports included in the second half of the CDM groups.

In a first example, when the quantity of CDM groups in the first CSI-RS resource is an even number, for example, the first CSI-RS resource includes J CDM groups, where J is an integer greater than 1, the first CDM group set associated with the first TCI state includes J1 CDM groups, and the J1 CDM groups are the first CDM group to the J1th CDM group of the J CDM groups. The second CDM group set associated with the second TCI state includes J1 CDM groups, the J1 CDM groups are the $(J-J1+1)^{th}$ CDM group to the $J^{th}$ CDM group of the J CDM groups, and J1=J/2.

For example, CDM groups associated with different TCI states may be determined by using a CDM group index. For example, index numbers are numbered from 0. When J is an even number, index numbers of the J CDM groups are 0 to J-1. Ports in CDM groups whose CDM group indexes are 0 to $\frac{J}{2}-1$ are associated with the first TCI state, and ports in CDM groups whose CDM group indexes are $\frac{J}{2}$ to J-1 are associated with the second TCI state.

In a second example, when the quantity of CDM groups in the first CSI-RS resource is an odd number, still for example, the first CSI-RS resource includes J CDM groups, where J is an odd number greater than 1, the first CDM group set associated with the first TCI state includes J1 CDM groups, and the J1 CDM groups are the first CDM group to the J1th CDM group of the J CDM groups. the second CDM group set associated with the second TCI state includes J1 CDM groups, the J1 CDM groups are the $(J-J1)^{th}$ CDM group to the $(J-1)^{th}$ CDM group of the J CDM groups, and $J1=\left\lfloor\frac{J}{2}\right\rfloor$. For example, J=5, the first CDM group and the second CDM group are associated with the first TCI state, and the third CDM group and the fourth CDM group are associated with the second TCI state.

For example, CDM groups associated with different TCI states may be determined by using a CDM group index. For example, index numbers are numbered from 0. When J is an odd number, ports in CDM groups whose CDM group indexes are 0 to $\left\lfloor\frac{J}{2}\right\rfloor-1$ are associated with the first TCI state, and ports in CDM groups whose CDM group indexes are $\left\lfloor\frac{J}{2}\right\rfloor$ to J-1 are associated with the second TCI state.

In a third example, when the quantity of CDM groups in the first CSI-RS resource is an odd number, still for example, the first CSI-RS resource includes J CDM groups, where J is an odd number greater than 1, the first CDM group set associated with the first TCI state includes J1 CDM groups, and the J1 CDM groups in the first CDM group set are the second CDM group to the $(J1+1)^{th}$ CDM group of the J CDM groups. The second CDM group set associated with the second TCI state includes J1 CDM groups, the J1 CDM groups in the second CDM group set are the $(J-J1+1)^{th}$ CDM group to the $J^{th}$ CDM group of the J CDM groups, and $J1=\left\lfloor\frac{J}{2}\right\rfloor$.. For example, J=5, the second CDM group and the third CDM group are associated with the first TCI state, and the fourth CDM group and the fifth CDM group are associated with the second TCI state.

For example, CDM groups associated with different TCI states may be determined by using a CDM group index. For example, index numbers are numbered from 0. When J is an odd number, ports in CDM groups whose CDM group indexes are 1 to $\left\lfloor\frac{J}{2}\right\rfloor$ are associated with the first TCI state, and ports in CDM groups whose CDM group indexes are $\left\lfloor\frac{J}{2}\right\rfloor$ to J-1 are associated with the second TCI state.

In a fourth example, when the quantity of CDM groups in the first CSI-RS resource is an odd number, still for example, the first CSI-RS resource includes J CDM groups, where J is an odd number greater than 1, the first CDM group set associated with the first TCI state includes J1 CDM groups, and the J1 CDM groups in the first CDM group set are the first CDM group to the J1th CDM group of the J CDM groups. The second CDM group set associated with the second TCI state includes J1 CDM groups, the J1 CDM groups included in the second CDM group set are the $(J-J1+1)^{th}$ CDM group to the $J^{th}$ CDM group of the J CDM groups, and $J1=\left\lfloor\frac{J}{2}\right\rfloor$. For example, J=5, the first CDM group and the second CDM group are associated with the first TCI state, and the fourth CDM group and the fifth CDM group are associated with the second TCI state. For example, CDM groups associated with different TCI states may be determined by using a CDM group index. For example, index numbers are numbered from 0. When J is an odd number, ports in CDM groups whose CDM group indexes are 0 to $\left\lfloor\frac{J}{2}\right\rfloor - 1$ are associated with the first TCI state, and ports in CDM groups whose CDM group indexes are $\left\lfloor\frac{J}{2}\right\rfloor$ to J-1 are associated with the second TCI state.

In a second manner, when a quantity of port groups included in a CSI-RS resource is an odd number, the CSI-RS is associated with only one TCI state. When a quantity of port groups included in a CSI-RS resource is an even number, the CSI-RS resource may be associated with two TCI states. In this manner, the first CSI-RS resource is still used as an example. The quantity of port groups included in the first CSI-RS resource is an even number, and the port groups may be associated in a manner similar to that for the CDM groups in the foregoing first example.

In an example, the CSI-RS resource associated with two TCI states may use any configuration in Row= {4,5,6,7,8,9,10,11,12,13,14,15,16,17,18} in Table 1. The CSI-RS resource associated with one TCI state may use any configuration in Table 1. In Table 1, configurations in Row={ 1, 2, 3} can be associated with only one TCI state. A main reason is as follows: Quantities of ports of NR CSI-RS resources corresponding to Row=1 and Row=2 are two, which clearly cannot meet a requirement for configuring two TCI states. A quantity of ports of a CSI-RS resource corresponding to Row=3 is two, but the two ports are multiplexed on a same time-frequency resource by using an orthogonal mask. If the two ports are associated with different TCI states, orthogonality is damaged, and strong interference is generated between the two ports, affecting channel estimation performance. Therefore, in this embodiment of this application, the CSI-RS resource corresponding to Row=3 is associated with only one TCI state. The CSI-RS resource associated with the two TCI states may be associated with different TCI states in any one of the foregoing possible manners of the first example to the fourth example.

In a third manner, time-frequency resources corresponding to port groups that are associated with different TCI states and that are in a CSI-RS resource associated with two TCI states are located in different time units. The time unit may be a slot (slot), a symbol (symbol), a mini-slot (mini-slot), or the like.

In an example, in this manner, the CSI-RS resource associated with the two TCI states may use any configuration in Row={5, 7, 11, 13, 14, 16, 17} in Table 1. Because an operating band of an NR system includes a millimeter-wave band, to resist severe large-scale fading, the network device and the terminal device need to use analog precoding on a radio frequency, that is, implement an analog beam by using a phased array. However, due to a cost problem of the terminal device, the terminal device is usually incapable of simultaneously receiving two signals by using two different analog beams. However, resources used by different ports in CSI-RS resources associated with Row={4, 6, 8, 9, 10, 12, 15, 18} are located on a same symbol. In this case, the terminal device may be required to support simultaneous receiving of the two signals by using the two different analog beams. Therefore, the CSI-RS resource associated with the two TCI states may not use configurations in the Row={4, 6, 8, 9, 10, 12, 15, 18}. For any CSI-RS resource associated with the Row={5, 7, 11. 13, 14, 16, 17}, for example, the CSI-RS resource includes J port groups, time-frequency resources to which ports in CDM groups whose CDM group indexes are 0 to $\frac{J}{2}-1$ are mapped are located on a different symbol from time-frequency resources to which ports in CDM groups whose CDM group indexes are $\frac{J}{2}$ to J-1 are mapped.

In a fourth manner, when a QCL type included in any one of two TCI states associated with one CSI-RS resource includes a type D, time-frequency resources corresponding to port groups that are associated with different TCI states and that are in the CSI-RS resource associated with the two TCI states are located in different time units. For a manner of associating different port groups of the CSI-RS resource associated with the two TCI states with the different TCI states, refer to the related descriptions in the first manner. Details are not described herein again. In an example, in this manner, when the QCL type included in any one of the two TCI states includes the type D, the CSI-RS resource associated with the two TCI states may use any configuration in Row={5, 7, 11, 13, 14, 16, 17} in Table 1. When the QCL types included in the two TCI states do not include the type D, the CSI-RS resource associated with the two TCI states may use any configuration in Row={ 4,5,6,7,8,9,10,11,12,13,14,15,16,17,18} in Table 1.

When the QCL type included in the TCI state does not include the type D, the type D is used to indicate to receive an analog beam. If the QCL type in the TCI state does not include the type D, the terminal device may use a same analog beam, or may be in a low frequency band, and the terminal device does not need to use different analog beams to receive signals on different ports in the CSI-RS resource. Based on this, that time-frequency resources to which port groups associated with different TCIs are mapped are located in different time units may not be limited. In other words, when the QCL types included in the two TCI states do not include the type D, the time-frequency resources corresponding to the port groups that are associated with the different TCI states and that are in the CSI-RS resource associated with the two TCI states may be located in a same time unit or different time units.

According to the invention, time-frequency resources corresponding to port groups that are associated with different TCI states and that are in a CSI-RS resource associated with two TCI states are located in different time units, and the time-frequency resources corresponding to the port groups associated with the different TCI states are not adjacent in time domain. When the time-frequency resources corresponding to the port groups associated with the different TCI states are adjacent in time domain, a requirement for switching an analog beam may not be met. The manner described in the first manner may be used to associate different port groups of the CSI-RS resource associated with the two TCI states with different TCI states.

In an example, in this manner, the CSI-RS resource associated with the two TCI states may use any configuration in Row={ 13, 14, 16, 17} in Table 1. Resources used by different ports in CSI-RS resources associated with Row={4, 6, 8, 9, 10, 12, 15, 18} are located on a same symbol, and the CSI-RS resources do not meet a requirement that the time-frequency resources corresponding to the port groups associated with the different TCI states are located in the different time units. For specific descriptions, refer to the related descriptions in the third manner. Therefore, the CSI-RS resource associated with the two TCI states may not use configurations in the Row={4, 6, 8, 9, 10, 12, 15, 18}.

In this manner, CSI-RS resources with configurations corresponding to Row={5, 7, 11} are associated with only one TCI state. For example, any CSI-RS resource corresponding to the Row={5, 7, 11} includes J port groups. In the CSI-RS resources with the configurations corresponding to the Row={5, 7, 11}, time-frequency resources to which ports in CDM groups whose CDM group indexes are 0 to $\frac{J}{2}-1$ are mapped and time-frequency resources to which ports in CDM groups whose CDM group indexes are $\frac{J}{2}$ to J-1 are mapped are located on different symbols, but are adjacent in time domain. In other words, a symbol on which the time-frequency resources to which the ports in the CDM groups whose CDM group indexes are 0 to $\frac{J}{2}-1$ are mapped are located is $l_0$, and a symbol on which the time-frequency resources to which the ports in the CDM groups whose CDM group indexes are $\frac{J}{2}$ to J-1 are mapped is $l_0+1$. In this case, if a QCL type included in any one of two TCI states includes a type D, the terminal device needs to immediately use another analog beam to receive a new OFDM signal on the next symbol $l_0+1$ after receiving an orthogonal frequency division multiplexing (orthogonal frequency division multiplexing, OFDM) signal on the symbol $l_0$. Even if only an operation of adding a cyclic prefix (cyclic prefix, CP) to an OFDM signal on each symbol is considered, for some terminal devices, it is a great challenge to complete analog beam switching within duration of one CP. That the time-frequency resources corresponding to the port groups that are associated with the different TCI states and that are in the CSI-RS resource associated with the two TCI states are not adjacent in time domain can adapt to a requirement of the terminal device for switching an analog beam. More specifically, the time-frequency resources to which the ports in the CDM groups whose CDM group indexes are 0 to $\frac{J}{2}-1$ are mapped may occupy a plurality of consecutive OFDM symbols, and the time-frequency resources to which the ports in the CDM groups whose CDM group indexes are $\frac{J}{2}$ to J-1 are mapped may occupy a plurality of consecutive OFDM symbols. Therefore, to meet the requirement of the terminal device for switching the analog beam, the last OFDM symbol corresponding to the time-frequency resources to which the ports in the CDM groups whose CDM group indexes are 0 to $\frac{J}{2}-1$ are mapped is not adjacent to the first OFDM symbol corresponding to the time-frequency resources to which the ports in the CDM groups whose CDM group indexes are $\frac{J}{2}$ to J-1 are mapped.

In a sixth manner, when a QCL type included in any one of two TCI states associated with one CSI-RS resource includes a type D, time-frequency resources corresponding to port groups that are associated with different TCI states and that are in the CSI-RS resource associated with the two TCI states are located in different time units and are not adjacent in time domain.

In an example, in this manner, when the QCL type included in any one of the two TCI states includes the type D, the CSI-RS resource associated with the two TCI states may use any configuration in Row={ 13, 14, 16, 17} in Table 1. Resources used by different ports in CSI-RS resources associated with Row={4, 6, 8, 9, 10, 12, 15, 18} are located on a same symbol, and the CSI-RS resources do not meet a requirement that the time-frequency resources corresponding to the port groups associated with the different TCI states are located in the different time units. For specific descriptions, refer to the related descriptions in the third manner. Therefore, the CSI-RS resource associated with the two TCI states may not use configurations in the Row={4, 6, 8, 9, 10, 12, 15, 18}. CSI-RS resources with configurations corresponding Row={ 5, 7, 11} do not meet a requirement that time-frequency resources corresponding to different port groups are located in different time units and are not adjacent in time domain. Therefore, the CSI-RS resource associated with the two TCI states may not use configurations in the Row={ 5, 7, 11}. For specific related descriptions, refer to the related descriptions in the fifth manner. Details are not described herein again.

In a seventh manner, when a QCL type included in any one of two TCI states associated with one CSI-RS resource includes a type D, time-frequency resources corresponding to port groups that are associated with different TCI states and that are in the CSI-RS resource associated with the two TCI states are located in different time units, and a quantity of time units between the time-frequency resources in time domain is greater than or equal to a capability parameter reported by the terminal device. The capability parameter reported by the terminal device may indicate a delay required for simulating beam switching. The capability parameter reported by the terminal device may be a parameter independently reported by the terminal device, or a capability parameter specified in an existing protocol, for example, a capability parameter FG2-28 A-CSI-RS beam switching timing in NR. By using the capability parameter, the network device may obtain a minimum time interval between sending downlink control information (downlink control information, DCI) and sending an AP-CSI-RS. The terminal device may receive, by using an analog beam, the DCI and the AP-CSI-RS that are sent by the network device. When different analog beams are used to receive the two signals, a specific delay is required for beam switching. Therefore, when the DCI is received, there is sufficient time for switching the analog beam to receive the AP-CSI-RS.

In an example, in this manner, when the QCL type included in any one of the two TCI states includes the type D, the CSI-RS resource associated with the two TCI states may use any configuration in Row={ 13, 14, 16, 17} in Table 1. CSI-RS resources associated with Row={4, 6, 8, 9, 10, 12, 15, 18} do not meet a requirement that the time-frequency resources corresponding to the port groups associated with the different TCI states are located in the different time units, for specific descriptions, refer to the related descriptions in the third manner. Therefore, the CSI-RS resource associated with the two TCI states may not use configurations in the Row={4, 6, 8, 9, 10, 12, 15, 18}. CSI-RS resources with configurations corresponding to Row={5, 7, 11} do not meet a requirement that time-frequency resources corresponding to different port groups are located in different time units and an interval in time domain is greater than or equal to the capability parameter reported by the terminal device is not met. Therefore, the CSI-RS resource associated with the two TCI states may not use configurations in Row={5, 7, 11}. More specifically, time-frequency resources to which ports in CDM groups whose CDM group indexes are 0 to $\frac{J}{2}-1$ are mapped may occupy a plurality of consecutive OFDM symbols, and time-frequency resources to which ports in CDM groups whose CDM group indexes are $\frac{J}{2}$ to J-1 are mapped may occupy a plurality of consecutive OFDM symbols. Therefore, to meet a requirement of the terminal device for switching the analog beam, an interval between the last OFDM symbol corresponding to the time-frequency resources to which the ports in the CDM groups whose CDM group indexes are 0 to $\frac{J}{2}-1$ are mapped and the first OFDM symbol corresponding to the time-frequency resources to which the ports in the CDM groups whose CDM group indexes are $\frac{J}{2}$ to J-1 are mapped meets a requirement of being greater than or equal to the capability parameter reported by the terminal device. For specific related descriptions, refer to the related descriptions in the fifth manner. Details are not described herein again.

Because a CSI-RS resource associated with one TCI state may not be limited, in any one of the foregoing manners, the CSI-RS resource associated with one TCI state may use a configuration in any row in Table 1.

In another possible implementation, when the network device configures association relationships between different port groups in a same CSI-RS resource and two TCI states, ports associated with different TCI states may be set in the foregoing manner based on a CDM group, or may be directly determined based on port identifiers.

In an example, the first CSI-RS resource is used as an example. Ports whose port identifiers are odd numbers and that are of ports corresponding to the first CSI-RS resource form a first port group, and the first port group is associated with a first TCI state; and ports whose port identifiers are even numbers form a second port group, and the second port group is associated with a second TCI state.

In another example, the first CSI-RS resource is used as an example. A subset of a port group including ports whose port identifiers are odd numbers and that are of ports corresponding to the first CSI-RS resource is a first port group, and the first port group is associated with a first TCI state. A subset of a port group including ports whose port identifiers are even numbers is a second port group, and the second port group is associated with a second TCI state. Further, a configuration of a port in the subset may be configured by the network device for the terminal device.

S202: After receiving the CSI-RS resource configuration information from the network device, the terminal device measures CSI based on the CSI-RS resource configuration information.

S203: The terminal device reports the CSI to the network device.

The CSI may be obtained by the terminal device by performing measurement on each CSI-RS resource based on a CSI-RS resource set configured by the network device.

In a possible manner, the CSI may include two parts. A first part includes an optimal measurement result obtained by the terminal device by performing measurement on a CSI-RS resource associated with one TCI state in the CSI-RS resource set. A second part includes an optimal measurement result obtained by the terminal device by performing measurement on a CSI-RS resource associated with two TCI states in the CSI-RS resource set.

In an example, the CSI-RS resource set includes K CSI-RS resources, K1 CSI-RS resources of the K CSI-RS resources are associated with one TCI state, and the remaining K-K1 CSI-RS resources are associated with two TCI states. For example, if the K-K1 CSI-RS resources include a first CSI-RS resource, and a measurement quantity obtained by performing measurement on the first CSI-RS resource is optimal, the CSI includes a first CSI parameter obtained by performing measurement on the first CSI-RS resource. If the K1 CSI-RS resources include a second CSI-RS resource, and a measurement quantity obtained by performing measurement on the second CSI-RS resource is optimal, the CSI further includes a second CSI parameter obtained by performing measurement on the second CSI-RS resource. In addition to a CRI, measurement quantities included in the CSI reported by the terminal device may further include a rank indicator (rank indicator, RI), a precoding matrix indicator (precoding matrix indicator, PMI), a channel quality indicator (channel quality indicator, CQI), a wideband PMI (i1), a layer indicator (layer indicator, LI), a synchronization signal block index (synchronization signal block index, SSB Index), layer 1 reference signal received power (layer 1 reference signal received power, L1-RSRP), layer 1 reference signal received power (layer 1 reference signal received power, L1-RSRP), layer 1 reference signal received quality (layer 1 reference signal received quality, L1-RSRQ), and the like. Measurement quantities included in the first CSI parameter include one or more of CRI, PI, PMI, CQI, SSB index, LI, L1-RSRP, L1-RSRQ, or the like. Measurement quantities included in the second CSI parameter include one or more of CRI, PI, PMI, CQI, SSB index, LI, L1-RSRP, L1-RSRQ, or the like. For ease of distinguishing, the CRI included in the first CSI parameter is referred to as a first CRI, and the CRI included in the second CSI parameter is referred to as a second CRI. For example, the first CSI parameter includes the first CSI-RS resource indicator (CSI-RS resource Indicator, CRI), and a CSI-RS resource indicated by the first CRI is the first CSI-RS resource. In addition to the first CRI, the first CSI parameter further includes another CSI parameter (for example, a RI, a PMI, a CQI, a LI, L1-RSRP, or L1-RSRQ), and the another CSI parameter is obtained through measurement on the first CSI-RS resource. The second CSI parameter includes the second CRI, and a CSI-RS resource indicated by the second CRI is the second CSI-RS resource. In addition to the second CRI, the second CSI parameter further includes another CSI parameter (for example, a RI, a PMI, a CQI, an SSB index, a LI, L1-RSRP, or L1-RSRQ), and the another CSI parameter is obtained through measurement on the second CSI-RS resource.

In this embodiment of this application, the CSI reported by the terminal device includes two parts. When the terminal device measures the CSI based on the CSI-RS resource associated with the two TCI states, it is actually assumed that two TRPs serve the terminal device simultaneously, a better CSI measurement result can be obtained. When a plurality of TRPs are used for scheduling, interference to transmission between different TRPs is prevented. In addition, the measurement result obtained assumed that the two TRPs serve the terminal device simultaneously can better reflect a total channel state between the two TRPs and the terminal device, to improve system performance. The terminal device further measures the CSI on the CSI-RS resource associated with one TCI state, a channel state between one TRP and the terminal device can be reflected, and a possibility that the terminal device performs scheduling by using a single TRP is improved.

In another possible manner, the CSI may include one part. The CSI includes an optimal measurement result obtained by the terminal device by performing measurement on a CSI-RS resource in the CSI-RS resource set. The optimal measurement result may be a CSI measurement result obtained by performing measurement on a CSI-RS resource associated with one TCI state, or may be a CSI measurement result obtained by performing measurement on a CSI-RS resource associated with two TCI states.

It should be noted that a manner in which the terminal device measures the CSI and reports the CSI is related to a sending mode. The sending mode includes one or more of a multi-DCI-based multi-TRP transmission scheme (mDCI mTRP), a single-DCI multi-TRP scheme 1a, a scheme 2a, a scheme 2b, a scheme 3, or a scheme 4. In this embodiment of this application, different CSI-RS resources may use a same CSI measurement and CSI reporting manner, or may use different CSI measurement and CSI reporting manners. In other words, different CSI-RS resources may correspond to different sending modes, or correspond to different sending modes.

In an optional implementation, before S202, the network device may send mode indication information to the terminal device. For example, the CSI-RS resource set includes N CSI-RS resources. The mode indication information indicates that each of the N CSI-RS resources included in the CSI-RS resource set is associated with one of M sending modes. The M sending modes may include M of mDCI mTRP, a single-DCI multi-TRP scheme 1a, a scheme 2a, a scheme 2b, a scheme 3, or a scheme 4. N is an integer greater than 1, and M is a positive integer less than or equal to N.

In a possible manner, the mode indication information may be included in CSI-RS reporting configuration information. Specifically, the network device sends the CSI-RS reporting configuration information to the terminal device, where the CSI-RS reporting configuration information includes the mode indication information.

In another possible manner, the network device may send the mode indication information to the terminal device by using separate RRC signaling.

Different CSI-RS resources in the N CSI-RS resources in the CSI-RS resource set may use a same sending mode, or different CSI-RS resources in the N CSI-RS resources may use different sending modes.

In an example, the N CSI-RS resources use a same sending mode. The mode indication information may include an indication. For ease of description, the indication is referred to as an indication 1, and the indication 1 is used to indicate an identifier of a sending mode jointly used by the N CSI-RS resources. For example, the identifier of the sending mode may be an index value of the sending mode, a name of the sending mode, or the like. When performing CSI measurement on all CSI-RS resources in the CSI-RS resource set associated with the CSI, the terminal device performs CSI measurement and reporting based on the sending mode indicated by the sending mode indication information.

In another example, the mode indication information indicates only a sending mode corresponding to a CSI-RS resource associated with two TCI states. In a case, different CSI-RS resources associated with two TCI states correspond to a same sending mode. The mode indication information may include one indication that is referred to as an indication 1, and the indication 1 is used to indicate a sending mode corresponding to a CSI-RS resource that is of the N CSI-RS resources and that is associated with two TCI states. In another case, different CSI-RS resources associated with two TCI states may correspond to different sending modes. In an example, a quantity of CSI-RS resources associated with two TCI states in the N CSI-RS resources is n1, the mode indication information may include n1 indications, and the n1 indications are in a one-to-one correspondence with the n1 CSI-RS resources. For example, an arrangement order of the n1 indications in the mode indication information is in a one-to-one correspondence with an order of the n1 CSI-RS resources in the CSI-RS resource set. For example, n1=2, and an arrangement order of IDs of two CSI-RS resources is {csiResourceID1, csiResourceID2}. Two sending modes of an indication 1 and an indication 2 are respectively txMode1 and txMode2. In this case, an arrangement order of the two sending modes in the mode indication information is {txMode1, txMode2}. In this case, the CSI-RS resource corresponding to csiResourceID1 is associated with txmode1, and the CSI-RS resource corresponding to csiResourceID2 is associated with txMode2. For another example, the mode indication information may include an association relationship between the n1 CSI-RS resources and sending modes corresponding to the CSI-RS resources, and the mode indication information includes {csiResourceID 1, txMode1} and {csiResourceID2, txMode2}.

In still another example, CSI-RS resources that are of the N CSI-RS resources and that are associated with one TCI state correspond to a same sending mode, and CSI-RS resources that are of the N CSI-RS resources and that are associated with two TCI states correspond to a same sending mode. A sending mode corresponding to a CSI-RS resource associated with one TCI state in the N CSI-RS resources is different from a sending mode used by a CSI-RS resource associated with two TCI states. In this case. the mode indication information may include an indication 1 and an indication 2. The indication 1 is used to indicate the sending mode corresponding to the CSI-RS resource associated with one TCI state, and the indication 2 is used to indicate the sending mode corresponding to the CSI-RS resource associated with two TCI states. Two sending modes of the indication 1 and the indication 2 are respectively txMode1 and txMode2. txMode1 and txMode2 may be included in the mode indication information in a sequence: {txMode1, txMode2}, or {txMode2, txMode1}.

In yet another example, the mode indication information includes N indications, and the N indications are sequentially in a one-to-one correspondence with the N CSI-RS resources in the CSI-RS resource set. For example, the CSI-RS resource set includes four CSI-RS resources, and IDs of the four CSI-RS resources are respectively {csiResourceID1, csiResourceID2, csiResourceID3, esiResourceID4}. If sending modes of the four CSI-RS resources indicated by the mode indication information are {txMode1, txMode2, txMode3, txMode4} respectively, the CSI-RS resource corresponding to csiResourceID1 is associated with txMode1, the CSI-RS resource corresponding to csiResourceID2 is associated with txMode2, the CSI-RS resource corresponding to csiResourceID3 is associated with txMode3, and the CSI-RS resource corresponding to csiResourceID4 is associated with txMode4. It should be noted that, in this example, sending modes corresponding to the N CSI-RS resources may be the same or may be different, or sending modes corresponding to some of the N CSI-RS resources are the same.

In still yet another example, the network device may determine, based on a quantity of types of the sending modes corresponding to the N CSI-RS resources, a quantity of indications included in the mode indication information. For example, when the sending modes corresponding to the N CSI-RS resources are the same, the mode indication information includes only one indication used to indicate the same sending mode. When the sending modes corresponding to the N CSI-RS resources are not totally the same, the mode indication information may include N indications, and the N indications are respectively used to indicate the sending modes of the N CSI-RS resources.

In a further example, when the mode indication information indicates a sending mode corresponding to a CSI-RS resource associated with two TCI states, the network device may determine, based on a quantity of types of sending modes corresponding to CSI-RS resources that are associated with the two TCI states and that are of the N CSI-RS resources, a quantity of indications included in the mode indication information. For example, when n1 CSI-RS resources of the N CSI-RS resources are associated with two TCI states, and the n1 CSI-RS resources correspond to a same sending mode, the mode indication information may include only one indication used to indicate the same sending mode. When sending modes corresponding to the n1 CSI-RS resources are not totally the same, the mode indication information may include n1 indications, and the n1 indications are respectively used to indicate sending modes corresponding to the n1 CSI-RS resources associated with two TCI states.

It should be noted that, in CSI measurement, a proper PMI needs to be selected. A selection process includes: determining receive signal interference noise ratios (signal interference noise ratios, SINRs) based on candidate PMIs, calculating data receiving rates based on the SINRs, and comparing the data receiving rates corresponding to the candidate PMIs. A reported PMI is a PMI that can obtain a highest data receiving rate and that is of measured PMI. A CQI is a quantized value of a receive SINR corresponding to the reported PMI. A RI is used to indicate a quantity of valid data layers of a PDSCH. The RI is used to notify the network device of a quantity of codewords (Codewords, CW) currently supported by the terminal device.

The following uses the mDCI mTRP and the scheme 2a/2b as examples to describe a procedure of performing CSI measurement under different sending mode assumptions. As shown in FIG. 3, two TRPs are used as an example: a TRP 1 and a TRP 2.

First, a manner of performing CSI measurement in an mDCI mTRP mode is described.

A terminal device separately receives CSI-RS resources from the TRP 1 and the TRP 2 by using CSI-RS resource configuration information, and obtains, through estimation, corresponding channel matrices H1 and H2. When a PMI 1 (information used to indicate an optimal precoding matrix when the TRP 1 is sending) and a PMI 2 (information used to indicate an optimal precoding matrix when the TRP 2 is sending) are estimated, for an SINR1 corresponding to the receive TRP 1, refer to formula (2), for an SINR2 corresponding to the receive TRP 2, refer to formula (3):

$$SINR_1 = \frac{\|H_1 P_1\|^2}{\|H_2 P_2\|^2 + I + N_0} \quad \text{Formula (2)}$$

$$SINR_2 = \frac{\|H_2 P_2\|^2}{\|H_1 P_1\|^2 + I + N_0} \quad \text{Formula (3)}.$$

P1 and P2 respectively represent precoding matrices corresponding to the candidate PMI 1 and the candidate PMI 2, and *I* represents other interference. In the foregoing formula (2) and formula (3), a signal from the TRP 1 is an interference signal for signal receiving of the TRP 2. Therefore, when the $SINR_2$ for the TRP 2 is calculated, the signal from the TRP 1 needs to be considered as interference. Similarly, a signal from the TRP 2 is also an interference signal for signal receiving of the TRP 1. Therefore, when the $SINR_1$ for the TRP 1 is calculated, the signal from the TRP 2 needs to be considered as interference. After the SNRs for the two TRPs are calculated on each CSI-RS resource, data receiving rates of the two TRPs may be further determined, to obtain a PMI with a highest data receiving rate for each TRP, and then determine a CQI. The PMI, CQI, and RI with optimal measurement results are obtained for each TRP.

Then, a manner of performing CSI measurement in a scheme 2a/2b mode is described.

When a PMI 1 and a PMI 2 are estimated, a receive SINR is obtained through measurement on a CSI-RS resource, and may be determined by using the following formula (4):

$$SINR = \frac{\|H_1 P_1\|^2 + \|H_2 P_2\|^2}{I + N_0} \quad \text{Formula (4)}.$$

In the foregoing formula, signals from the TRP 1 and the TRP 2 are both useful signals, and are not interference.

It can be learned from the foregoing analysis that, when different sending modes are assumed, CSI estimation manners are different.

After determining a sending mode of each CSI-RS resource in a CSI-RS resource set, the terminal device performs, based on the sending mode, CSI measurement on the CSI-RS resource included in the CSI-RS resource set, and reports CSI to a network device. A CSI parameter included in the reported CSI is related to the sending mode.

In an example, as shown in Table 2, CSI parameters included in reported CSI corresponding to different sending modes are described.

Table 2

| Sending mode | Reported CSI parameter |
| --- | --- |
| mDCI mTRP | One CRI, two RIs, two PMIs, and two CQIs |
| sDCI mTRP/Scheme 1a | One CRI, two RIs, two PMIs, and one CQI |
| Scheme 2a/Scheme 2b/Scheme 3/Scheme 4 | One CRI, one RI, two PMIs, and one CQI |

The terminal device may determine, based on the sending mode, measurement quantities (or referred to as CSI parameters) included in the CSI reported by the terminal device. In another possible implementation, the network device may also indicate, to the terminal device. measurement quantities included in the CSI reported by the terminal device.

In an example, the network device may send a first configuration parameter and a second configuration parameter to the terminal device. The first configuration parameter is used to indicate a measurement quantity of a CSI-RS resource associated with one TCI state in the CSI-RS resource set, and the second configuration information is used to indicate a measurement quantity of a CSI-RS resource associated with two TCI states in the CSI-RS resource set. For example, the first configuration parameter may also be referred to as reportQuantity, and the second configuration parameter may also be referred to as reportQuantityExt.

In another example, the network device sends a third configuration parameter to the terminal device. A first part of fields in the third configuration parameter are used to indicate a measurement quantity of a CSI-RS resource associated with one TCI state in the CSI-RS resource set, and a second part of fields in the third configuration parameter are used to indicate a measurement quantity of a CSI-RS resource associated with two TCI states in the CSI-RS resource set. The third configuration parameter may also be referred to as reportQuantity. For example, the first part of fields and the second part of fields do not overlap, and form the third configuration parameter. For another example, the second part of fields include the first part of fields. For example, the second part of fields may be the entire third configuration information, and the first part of fields are a part of the third configuration parameter. For example, reportQuantity='CRI-RI-PMI-CQI-PMI', the measurement quantity of the CSI-RS resource associated with one TCI state in the associated CSI-RS resource set is 'CRI-RI-PMI-CQI', and the measurement quantity of the CSI-RS resource associated with two TCI states in the CSI-RS resource set is 'CRI -RI-PMI-CQI-PMI', which may be understood as reporting two PMIs, one CRI, one RI, and one CQI.

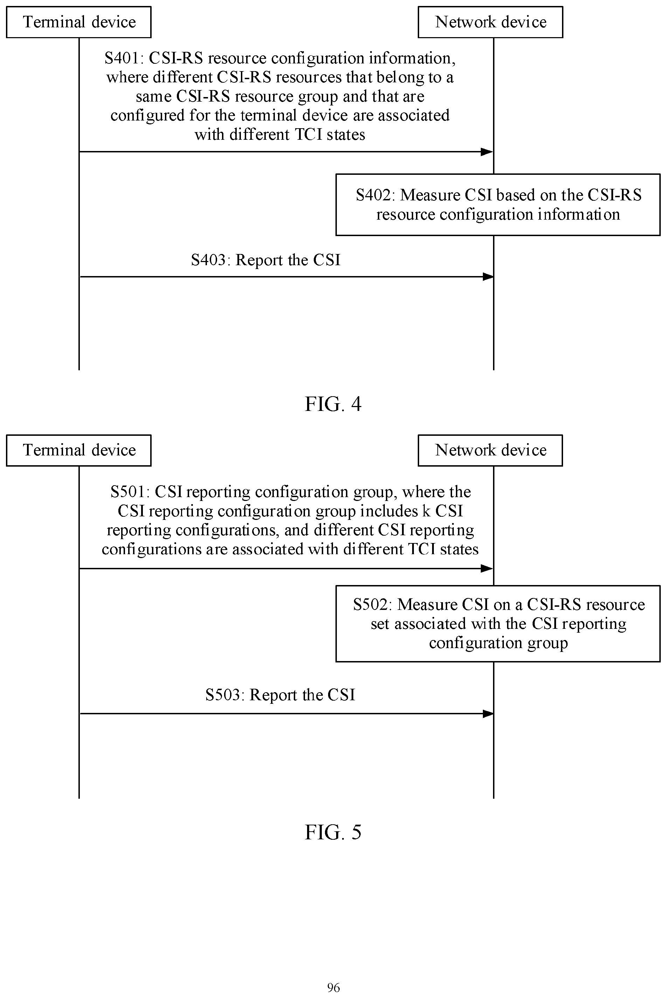

The following describes the second possible implementation in detail with reference to a specific embodiment. Different CSI-RS resources that belong to a same CSI-RS resource group and that are configured for the RS resource group and that are configured for a terminal device are associated with different TRPs. Refer to FIG. 4.

S401: A network device sends CSI-RS resource configuration information to the terminal device. The CSI-RS resource configuration information includes a CSI-RS resource set used for channel measurement, and the CSI-RS resource set used for channel measurement includes one or more CSI-RS resources. The CSI-RS resources in the CSI-RS resource set may be located in different CSI-RS resource groups or in a same CSI-RS resource group. CSI-RS resources included in the CSI-RS resource group may be associated with different TCI states. For example, the CSI-RS resource set includes a first CSI-RS resource group. The first CSI-RS resource group includes a first CSI-RS resource and a second CSI-RS resource, an association relationship exists between the first CSI-RS resource and a first transmission configuration indicator state, an association relationship exists between the second CSI-RS resource and a second transmission configuration indicator state, and an association relationship exists between the first CSI-RS resource and the second CSI-RS resource. The association relationship (or referred to as a binding relationship) exists between the first CSI-RS resource and the second CSI-RS resource. CSI-RS resources in a binding relationship are CSI-RS resources that are allocated to one terminal device and that are used to communicate with a plurality of TRPs in a multi-TPR scenario. In other words. the binding relationship is used to indicate to jointly perform CSI measurement on two CSI-RS resources that have a binding relationship.

In an example, the first CSI-RS resource group may further include another CSI-RS resource associated with the first TCI state. The first CSI-RS resource group may further include another CSI-RS resource associated with the second TCI state.

In a possible implementation, the binding relationship between different CSI-RS resources may be indicated by the network device to the terminal device.

In an example, the network device may indicate, to the terminal device in a manner of a bitmap (bitmap), a binding relationship between the CSI-RS resources included in the CSI-RS resource group. A length of the bitmap is equal to a quantity of the CSI-RS resources included in the CSI-RS resource set. Each bit in the bitmap is sequentially associated with each CSI-RS resource in the CSI-RS resource set, and CSI-RS resources whose corresponding bit values are set values have a binding relationship to form one CSI-RS resource group. For example, a CSI-RS resource set includes four CSI-RS resources: {csiRSResource1, csiRSResource2, csiRSResource3, csiRSResource4 }. For example, the set value is 1. If a bitmap configured by the network device for the terminal device is '0011', it indicates that a binding relationship exists between csiRSResource3 and csiRSResource4. For another example, if a bitmap configured by the network device for the terminal device is '1111', it indicates that a binding relationship exists between CSI-RS resources that are in csiRSResource1, csiRSResource2, csiRSResource3, and csiRSResource4 and that are associated with different TCI states. For example, if both csiRSResource1 and csiRSResource2 are in an association relationship with the first TCI state, and both csiRSResource3 and csiRSResource4 are in an association relationship with the second TCI state, a binding relationship exists between csiRSResource1 and csiRSResource3, a binding relationship exists between csiRSResource2 and csiRSResource4, a binding relationship exists between csiRSResource1 and csiRSResource4, and a binding relationship exists between csiRSResource2 and csiRSResource3.

In another example, the CSI-RS resource configuration information sent by the network device to the terminal device includes an information element used to indicate the binding relationship. The information element includes identifiers of CSI-RS resources having a binding relationship. For example, a CSI-RS resource set includes four CSI-RS resources: {csiRSResource1, csiRSResource2, csiRSResource3, csiRSResource4}. The information element may include {csiRSResourceID1, csiRSResourceID2}, which indicates that a binding relationship exists between csiRSResource1 and csiRSResource2. For another example, a CSI-RS resource set includes six CSI-RS resources: {csiRSResource1, csiRSResource2, csiRSResource3, csiRSResource4, csiRSResource5, csiRSResource6}. The information element may include {csiRSResourceID1, csiRSResourceID2} and {csiRSResourceID5, csiRSResourceID6}, which indicates that a binding relationship exists between csiRSResource1 and csiRSResource2, and a binding relationship exists between csiRSResource5 and csiRSResource6.

In still another example, two CSI-RS resources in a binding relationship form one CSI-RS resource group, and the CSI-RS resource set may include one or more CSI-RS resource groups. CSI-RS resources that do not form a CSI-RS resource group are applied to a single-TRP scenario. For example, a CSI-RS resource set includes six CSI-RS resources: {csiRSResource1, csiRSResource2, csiRSResource3, csiRSResource4, csiRSResource5, csiRSResource6}. csiRSResource1 and csiRSResource2 are included in one CSI-RS resource group, and are respectively associated with different TCI states. csiRSResource5 and csiRSResource6 are included in another CSI-RS resource group, and are respectively associated with different TCI states. csiRSResource3 and csiRSResource4 are not bound to the other CSI-RS resources, and are applied only to a single-TRP scenario.

In a possible implementation, the network device may configure an association relationship between different CSI-RS resources in a CSI-RS resource group and a TCI state in any one of the following manners.

In a first possible example, different CSI-RS resources that are in a binding relationship in the CSI-RS resource group occupy different time units. The first CSI-RS resource group is used as an example. In the first CSI-RS resource group, the first CSI-RS resource and the second CSI-RS resource occupy different time units.

In a second possible example, when a QCL type of any TCI state associated with different CSI-RS resources that have a binding relationship in a CSI-RS resource group includes a type D, the different CSI-RS resources in the binding relationship occupy different time units. The first CSI-RS resource group is used as an example. When the first TCI state associated with the first CSI-RS resource or the second TCI state associated with the second CSI-RS resource includes the type D, the first CSI-RS resource and the second CSI-RS resource in the first CSI-RS resource group occupy different time units.

In a third possible example, different CSI-RS resources that are in a binding relationship in a CSI-RS resource group occupy different time units, and are not adjacent in time domain. The first CSI-RS resource group is used as an example. In the first CSI-RS resource group. the first CSI-RS resource and the second CSI-RS resource occupy different time units, and are not adjacent in time domain.

In a fourth possible example, when a QCL type of any TCI state associated with different CSI-RS resources that have a binding relationship in a CSI-RS resource group includes a type D, the different CSI-RS resources in the binding relationship occupy different time units, and are not adjacent in time domain.

In a fifth possible example, different CSI-RS resources that are in a binding relationship in a CSI-RS resource group occupy different time units, and a quantity of time units between in time domain is greater than or equal to a capability parameter reported by the terminal device.

In a sixth possible example, when a QCL type of any TCI state associated with different CSI-RS resources that have a binding relationship in a CSI-RS resource group includes a type D, the different CSI-RS resources in the binding relationship occupy different time units, and a quantity of time units between in time domain is greater than or equal to a capability parameter reported by the terminal device.

S402: After receiving the CSI-RS resource configuration information, the terminal device measures CSI.

S403: The terminal device reports the CSI to the network device.

The CSI may be obtained by the terminal device by performing measurement on each CSI-RS resource and each CSI-RS resource group based on the CSI-RS resource set configured by the network device.

In a possible manner, the CSI may include two parts. A first part includes an optimal measurement result obtained by the terminal device by performing measurement on a CSI-RS resource in the CSI-RS resource set. The second part includes an optimal measurement result obtained by the terminal device by performing measurement on a plurality of CSI-RS resource groups that are in a binding relationship. For example, the CSI-RS resource set includes eight CSI-RS resources, where every two of four CSI-RS resources are in a binding relationship, and CSI-RS resources that are in the binding relationship are associated with different TCI states. In this case, the first part includes an optimal measurement result obtained by the terminal device by performing measurement on the eight CSI-RS resources, and the second part includes an optimal measurement result obtained by the terminal device by performing measurement on the two CSI-RS resource groups in the binding relationship. For example, the optimal measurement result in the first part is obtained through measurement on a third CSI-RS resource, and the third CSI-RS resource is associated with a third transmission configuration indicator state. The optimal measurement result in the first part may include a first CSI parameter. The first CSI parameter includes a first CRI, a CSI-RS resource indicated by the first CRI is the third CSI-RS resource, and a parameter other than the first CRI in the first CSI parameter is determined on the third CSI-RS resource. For example, the optimal measurement result in the second part is obtained through measurement on the first CSI-RS resource group, or is obtained through joint measurement on the first CSI-RS resource and the second CSI-RS resource. The optimal measurement result in the second part may include a second CSI parameter. The second CSI parameter includes a second CRI, a CSI-RS resource indicated by the second CRI is the first CSI-RS resource group, and a parameter other than the second CRI in the second CSI parameter is determined on the first CSI-RS resource group.

In another possible manner, the CSI may include one part. The CSI includes optimal measurement results obtained by the terminal device by performing measurement on a CSI-RS resource in the CSI-RS resource set and a plurality of CSI-RS resource groups in a binding relationship. The optimal measurement result may be a CSI measurement result obtained by performing measurement on a CSI-RS resource associated with one TCI state, or may be a CSI measurement result obtained by performing measurement on a CSI-RS resource associated with two TCI states.

In an optional implementation, before S402, the network device may send mode indication information to the terminal device. For example, the CSI-RS resource set includes N CSI-RS resources. The mode indication information indicates that each of the N CSI-RS resources included in the CSI-RS resource set is associated with one of M sending modes. The M sending modes may include M of mDCI mTRP, a single-DCI multi-TRP scheme 1a, a scheme 2a, a scheme 2b, a scheme 3, or a scheme 4. N is an integer greater than 1, and M is a positive integer less than or equal to N. For a manner in which the mode indication information indicates a sending mode, refer to the description in the first possible implementation. Details are not described herein again.

The following describes the third possible implementation in detail with reference to a specific embodiment. Different CSI reporting configurations (CSI-ReportConfig) configured for the terminal device are associated with different TRPs. Refer to FIG. 5.

S501: A network device sends a CSI reporting configuration group to the terminal device. The CSI reporting configuration group includes k CSI reporting configurations.

In an example, k=2. CSI-RS resource sets for channel measurement corresponding to the two CSI reporting configurations (CSI-ReportConfig) are associated with different TCI states. For example, the two CSI reporting configurations are respectively a first CSI reporting configuration and a second CSI reporting configuration. The first CSI reporting configuration and the second CSI reporting configuration are used to configure a CSI reporting manner for the terminal device, the first CSI reporting configuration is associated with a first CSI-RS resource set, the second CSI reporting configuration is associated with a second CSI-RS resource set, an association relationship exists between the first CSI-RS resource set and a first transmission configuration indicator state, and an association relationship exists between the second CSI-RS resource set and a second transmission configuration indicator state. A binding relationship exists between the first CSI reporting configuration and the second CSI reporting configuration.

In another example, the CSI-RS reporting configuration group includes k>2 CSI-ReportConfigs. The network device may further send indication information to the terminal device, where the indication information indicates that a binding relationship between a first CSI reporting configuration and a second CSI reporting configuration in the k CSI-ReportConfigs. The first CSI reporting configuration is associated with a first CSI-RS resource set, the second CSI reporting configuration is associated with a second CSI-RS resource set, an association relationship exists between the first CSI-RS resource set and a first transmission configuration indicator state, and an association relationship exists between the second CSI-RS resource set and a second transmission configuration indicator state.

In a possible implementation, the network device may configure an association relationship between different CSI-RS resource sets and a TCI state in any one of the following manners.

In a first possible example, CSI-RS resource sets respectively corresponding to two CSI reporting configurations that are in a binding relationship occupy different time units. The first CSI-RS resource set and the second CSI-RS resource set are used as an example, the first CSI-RS resource set and the second CSI-RS resource set occupy different time units.

In a second possible example, when a QCL type of any TCI state associated with CSI-RS resource sets respectively corresponding to two CSI reporting configurations that are in a binding relationship includes a type D, the CSI-RS resource sets respectively corresponding to the two CSI reporting configurations that are in the binding relationship occupy different time units. The first CSI-RS resource set and the second CSI-RS resource set are used as an example, when a QCL type included in either of the first TCI state associated with the first CSI-RS resource set and the second TCI state associated with the second CSI-RS resource set includes a type D, the first CSI-RS resource set and the second CSI-RS resource set occupy different time units.

In a third possible example, CSI-RS resource sets respectively corresponding to two CSI reporting configurations that are in a binding relationship occupy different time units, and are not adjacent in time domain. The first CSI-RS resource set and the second CSI-RS resource set are used as an example, the first CSI-RS resource set and the second CSI-RS resource set occupy different time units, and are not adjacent in time domain.

In a fourth possible example, when a QCL type of any TCI state associated with CSI-RS resource sets respectively corresponding to two CSI reporting configurations that are in a binding relationship includes a type D, the CSI-RS resource sets respectively corresponding to the two CSI reporting configurations that are in the binding relationship occupy different time units, and are not adjacent in time domain.

In a fifth possible example, CSI-RS resource sets respectively corresponding to two CSI reporting configurations that are in a binding relationship occupy different time units, and a quantity of time units between in time domain is greater than or equal to a capability parameter reported by the terminal device.

In a sixth possible example, when a QCL type of any TCI state associated with CSI-RS resource sets respectively corresponding to two CSI reporting configurations that are in a binding relationship includes a type D, the CSI-RS resource sets respectively corresponding to the two CSI reporting configurations that are in the binding relationship occupy different time units, and a quantity of time units between in time domain is greater than or equal to a capability parameter reported by the terminal device.

S502: After receiving the CSI reporting configuration group, the terminal device measures CSI on a CSI-RS resource set associated with the CSI reporting configuration group.

S503: The terminal device reports the CSI to the network device.

The CSI may be obtained by the terminal device by performing measurement on a CSI-RS resource included in the CSI-RS resource sets corresponding to the two different CSI reporting configurations configured by the network device.

In a possible manner, the reported CSI may include two parts. One part includes optimal CSI measurement results obtained by the terminal device in the two CSI reporting configurations respectively by performing CSI measurement based on the two CSI reporting configurations configured by the network device. In other words, the part includes an optimal measurement result obtained by performing CSI measurement on the first CSI-RS resource set associated with the first CSI reporting configuration and an optimal measurement result obtained by performing CSI measurement on the second CSI-RS resource set associated with the second CSI reporting configuration. The other part includes an optimal CSI measurement result obtained by the terminal device by performing joint CSI measurement based on the two CSI reporting configurations configured by the network device, namely, a measurement result obtained by performing joint CSI measurement on the first CSI-RS resource set and the second CSI-RS resource set.

In another possible manner, the reported CSI includes an optimal CSI measurement result obtained by the terminal device by performing joint CSI measurement based on the two CSI reporting configurations configured by the network device, namely, a measurement result obtained by performing joint CSI measurement on the first CSI-RS resource set and the second CSI-RS resource set.

In an optional implementation, in this embodiment of this application, the network device may select a resource configuration manner based on a requirement or a port status of a resource configured for the terminal device, and the resource configuration manner may be the first possible implementation, the second possible implementation, or the third possible implementation.

In an example, when a quantity of ports included in a CSI-RS resource that needs to be configured by the network device for the terminal device is greater than 16, the second possible implementation may be used for resource configuration. When a quantity of ports included in a CSI-RS resource configured by the network device for the terminal device is not greater than 16, the first possible implementation may be used for resource configuration.

When the first possible implementation is used for resource configuration, implementation of measuring the CSI by the terminal device is simple. However, a same CSI-RS resource (a maximum of 32 ports) is divided into two port groups. This means that in a multi-TRP measurement mode, each TRP cannot be configured to perform CSI measurement based on 32 ports. However, when the second possible implementation is used for resource configuration, there is no problem that each TRP cannot perform CSI measurement based on 32 ports. Based on this, when two CSI-RS resources that need to be configured by the network device for the terminal device are associated with different TCI states, a quantity of ports of at least one of the two CSI-RS resources is 32, and configuration information of an association relationship between the two CSI-RS resources is delivered to the terminal device according to the method in the second possible implementation.

In another optional implementation, in this embodiment of this application, the network device may deliver two pieces of CSI-RS resource configuration information to the terminal device according to the first possible implementation and the second possible implementation.

The network device may indicate, to the terminal device, which one of the two pieces of CSI-RS resource configuration information is used for CSI measurement. In an example, a default resource configuration manner is used. The terminal device determines CSI-RS resource configuration information from the two pieces of CSI-RS resource configuration information in the default resource configuration manner, and performs CSI measurement and reporting by using CSI-RS resource configuration information corresponding to the default resource configuration manner. The terminal device may determine and select, based on switch statuses of two resource configuration manners, a resource configuration manner. The switch status may be indicated by the network device to the terminal device by using DCI.

In another example, when the network device sends a configuration indication to the terminal device, the terminal device determines CSI-RS resource configuration information from the two pieces of CSI-RS resource configuration information in a resource configuration manner indicated by the configuration indication, and performs CSI measurement and reporting by using the CSI-RS resource configuration information corresponding to the indicated resource configuration manner.

In still another optional implementation, in this embodiment of this application, the network device may perform CSI configuration on the terminal device according to at least two of the first possible implementation, the second possible implementation, or the third possible implementation.

The network device may further indicate, to the terminal device, which of the at least two implementations is used to perform CSI configuration on the terminal device.

In an example, a default CSI configuration manner is used. The terminal device selects the default CSI configuration manner from at least two CSI configuration manners, and performs CSI measurement and reporting by using CSI resource configuration information or a CSI reporting configuration corresponding to the default CSI configuration manner. The terminal device may determine and select, based on switch statuses of two CSI configuration manners, a CSI configuration manner. The switch status may be indicated by the network device to the terminal device by using DCI.

In another example, when the network device sends a configuration indication to the terminal device, the terminal device determines one CSI configuration manner from at least two CSI configuration manners in a CSI configuration manner indicated by the configuration indication, and performs CSI measurement and reporting by using the CSI-RS resource configuration information or CSI reporting configuration corresponding to the indicated CSI configuration manner.

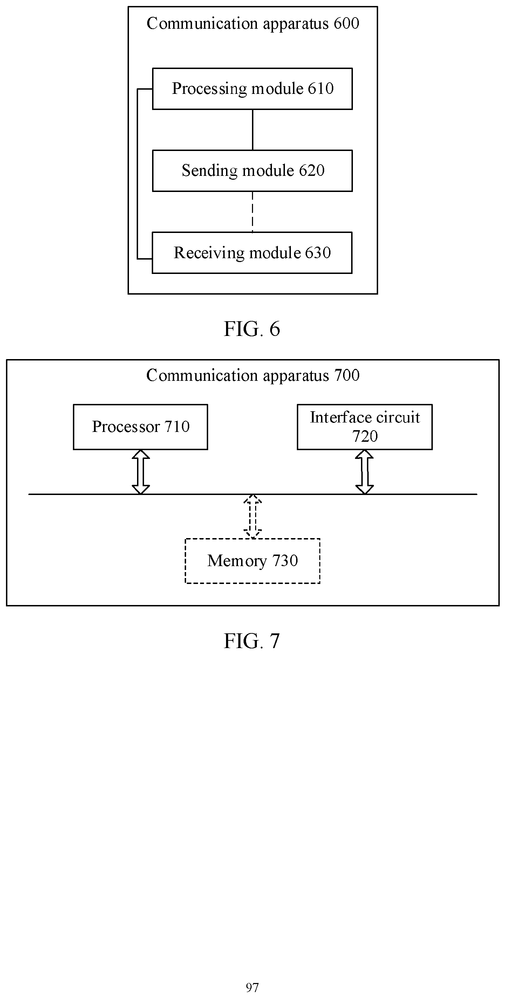

FIG. 6 is a schematic block diagram of a communication apparatus 600 according to an embodiment of this application. The communication apparatus 600 includes a processing module 610, a receiving module 630, and a sending module 620. The receiving module 630 and/or the sending module 620 may be referred to as a communication module, and the receiving module 630 and the sending module 620 may be separately disposed or integrated. In an example, the sending module 620 may be a transmitter, the receiving module 630 may be a receiver, the transmitter may include an antenna, a radio frequency circuit, and the like, and the receiver may also include an antenna, a radio frequency circuit, and the like. The transmitter and the receiver may belong to one function module, for example, referred to as a transceiver, or the transmitter and the receiver may be function modules independent of each other. The processing module 610 may be a processor, for example, a baseband processor, and the baseband processor may include one or more central processing units (central processing units, CPUs). In another example, the sending module 620 and the receiving module 630 may be radio frequency units, and the processing module 610 may be a processor, for example, a baseband processor. In still another example, the sending module 620 and the receiving module 630 may be input/output interfaces of a chip (for example, a baseband chip) (for example, the sending module 620 is an output interface, and the receiving module 630 is an input interface, or if input and output are of a same interface, both the sending module 620 and the receiving module 630 are the interface), and the processing module 610 may be a processor of a chip system, and may include one or more central processing units. It should be understood that, in this embodiment of this application, the processing module 610 may be implemented by using a processor or a processor-related circuit component, the sending module 620 may be implemented by using a transmitter or a transmitter-related circuit component, and the receiving module 630 may be implemented by using a receiver or a receiver-related circuit component.

The sending module 620 and the receiving module 630 may be a function module, and the function module may be referred to as a transceiver module, and the transceiver module can complete both a sending operation and a receiving operation. Alternatively, the sending module 620 and the receiving module 630 may be two function modules, and a transceiver module may be considered as a general term of the two function modules. The sending module 620 is configured to complete a sending operation, and the receiving module 630 is configured to complete a receiving operation.

In an application scenario, the communication apparatus 600 is used in a terminal device. For example, the communication apparatus 600 may be a terminal device, or may be a chip used in the terminal device, or another combined device, component, or the like that has a function of the terminal device. For example, the processing module 610 may be configured to perform all operations performed by the terminal device in any embodiment shown in FIG. 2, FIG. 4, or FIG. 5 except a receiving and sending operation. For example, the processing mode 610 is configured to measure CSI. In addition, for implementations of the sending module 620 and the receiving module 630, refer to the descriptions of the implementations of the sending module 620 and the receiving module 630.

One example

The receiving module 630 is configured to receive channel state information-reference signal CSI-RS resource configuration information from a network device. The CSI-RS resource configuration information includes a CSI-RS resource set, the CSI-RS resource set includes at least a first CSI-RS resource, an association relationship exists between a first port group corresponding to the first CSI-RS resource and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group.

The processing module 610 is configured to measure CSI based on the CSI-RS resource configuration information.

The sending module 620 is configured to report the CSI to the network device.

In a possible implementation, the CSI-RS resource set further includes a second CSI-RS resource, and an association relationship exists between a port corresponding to the second CSI-RS resource and a third transmission configuration indicator state.

The CSI includes a first measurement result obtained by performing CSI measurement on a CSI-RS resource in the CSI-RS resource set, and the first measurement result includes a first CSI parameter and a second CSI parameter.

The first CSI parameter includes a first channel state information-reference signal resource indicator CRI, a CSI-RS resource indicated by the first CRI is the first CSI-RS resource, and a CSI parameter other than the first CRI in the first CSI parameter is determined on the first CSI-RS resource.

The second CSI parameter includes a second CRI, a CSI-RS resource indicated by the second CRI is the second CSI-RS resource, and a CSI parameter other than the second CRI in the second CSI parameter is determined on the second CSI-RS resource.

In a possible implementation, the port in the first port group belongs to a first code division multiple access CDM group set, the first CDM group set includes one or more CDM groups, and an association relationship exists between the first CDM group set and the first transmission configuration indicator state.

The port in the second port group belongs to a second code division multiple access CDM group set, the second CDM group set includes one or more CDM groups, and an association relationship exists between the second CDM group set and the second transmission configuration indicator state.

An identifier of a CDM group in the first CDM group set is different from an identifier of a CDM group in the second CDM group set.

In a possible implementation, the first CSI-RS resource includes J CDM groups, where J is an integer greater than 1.

The first CDM group set includes J1 CDM groups, and the J1 CDM groups are the first CDM group to the $J1^{th}$ CDM group of the J CDM groups.

The second CDM group set includes J1 CDM groups, the J1 CDM groups are the $(J-J1+1)^{th}$ CDM group to the $J^{th}$ CDM group of the J CDM groups, and J1=floor(J/2), where floor() represents an operation of rounding down to the nearest integer.

In a possible implementation, a time-frequency resource corresponding to the port included in the first port group and a time-frequency resource corresponding to the port included in the second port group are located in different time units.

In a possible implementation, the first transmission configuration indicator state includes a quasi co-location type D, and/or the second transmission configuration indicator state includes a quasi co-location type D.

A time-frequency resource corresponding to the port included in the first port group and a time-frequency resource corresponding to the port included in the second port group are located in different time units.

According to the invention, the time-frequency resource corresponding to the port included in the first port group and the time-frequency resource corresponding to the port included in the second port group are not adjacent in time domain.

According to the invention, a quantity of time units between the time-frequency resource corresponding to the port included in the first port group and the time-frequency resource corresponding to the port included in the second port group in time domain is greater than or equal to a capability parameter reported by a terminal device.

In a possible implementation, the receiving module 630 is further configured to receive mode indication information from the network device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N.

Another example which is not according to the invention:
The receiving module 630 is configured to receive first channel state information-reference signal CSI-RS resource configuration information from a network device. The first CSI-RS resource configuration information includes a CSI-RS resource set, the CSI-RS resource set includes at least a first CSI-RS resource group, the first CSI-RS resource group includes a first CSI-RS resource and a second CSI-RS resource, an association relationship exists between the first CSI-RS resource and a first transmission configuration indicator state, and an association relationship exists between the second CSI-RS resource and a second transmission configuration indicator state. An association relationship exists between the first CSI-RS resource and the second CSI-RS resource.

The processing module 610 is configured to measure CSI based on the first resource configuration information.

The sending module 620 is configured to report the CSI to the network device.

In a possible implementation, the CSI resource configuration information further includes a third CSI-RS resource, and the third CSI-RS resource is associated with a third transmission configuration indicator state.

The CSI includes a first measurement result obtained by performing CSI measurement on a CSI-RS resource in the CSI-RS resource set, and the first measurement result includes a first CSI parameter and a second CSI parameter.

The first CSI parameter includes a first CRI, a CSI-RS resource indicated by the first CRI is the third CSI-RS resource, and a parameter other than the first CRI in the first CSI parameter is determined on the third CSI-RS resource.

The second CSI parameter includes a second CRI, a CSI-RS resource indicated by the second CRI is the first CSI-RS resource group, and a parameter other than the second CRI in the second CSI parameter is determined on the first CSI-RS resource group.

In a possible implementation, the first CSI-RS resource and the second CSI-RS resource occupy different time units.

In a possible implementation, the first transmission configuration indicator state includes a quasi co-location type D, or the second transmission configuration indicator state includes a quasi co-location type D.

The first CSI-RS resource and the second CSI-RS resource occupy different time units.

In a possible implementation, the first CSI-RS resource and the second CSI-RS resource are not adjacent in time domain.

In a possible implementation, an interval between a time unit occupied by the first CSI-RS resource and a time unit occupied by the second CSI-RS resource is greater than or equal to a capability parameter reported by a terminal device.

In a possible implementation, the receiving module 630 is further configured to receive mode indication information from the network device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N.

In a possible implementation, a quantity of ports corresponding to the CSI-RS resources included in the first CSI-RS resource group is greater than 16.

In a possible implementation, the receiving module 630 is further configured to receive second CSI-RS resource configuration information from the network device. The second CSI-RS resource configuration information includes the CSI-RS resource set, an association relationship exists between a first port group corresponding to a first CSI-RS resource included in the CSI-RS resource set and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group. Before the processing module 610 measures the CSI based on the first resource configuration information, the receiving module 630 is further configured to receive a configuration indication from the network device. The configuration indication is used to indicate to use a first resource configuration manner, a resource configuration manner for the first CSI-RS resource configuration information is the first resource configuration manner, and a resource configuration manner for the second CSI-RS resource configuration information is a second resource configuration manner.

Still another example which is not according to the invention:

The receiving module 630 is configured to receive a CSI reporting configuration group from a network device. The CSI reporting configuration group includes a first CSI reporting configuration and a second CSI reporting configuration, the first CSI reporting configuration and the second CSI reporting configuration are used to configure a CSI reporting manner for a terminal device, the first CSI reporting configuration is associated with a first CSI-RS resource set, the second CSI reporting configuration is associated with a second CSI-RS resource set, an association relationship exists between the first CSI-RS resource set and a first transmission configuration indicator state, an association relationship exists between the second CSI-RS resource set and a second transmission configuration indicator state, a binding relationship exists between the first CSI reporting configuration and the second CSI reporting configuration, and the binding relationship is used to indicate to measure CSI on CSI-RS resource sets respectively associated with two CSI reporting configurations that have a binding relationship.

The processing module 610 is configured to measure the CSI based on the CSI reporting configuration group.

The sending module 620 is configured to report the CSI to the network device.

In a possible implementation, the CSI includes a measurement result obtained by performing CSI measurement on the first CSI-RS resource set associated with the first CSI reporting configuration, a measurement result obtained by performing CSI measurement on the second CSI-RS resource set associated with the second CSI reporting configuration, and a measurement result obtained by performing CSI measurement on the first CSI-RS resource set and the second CSI-RS resource set.

In a possible implementation, the receiving module 630 is further configured to receive indication information from the network device. The indication information indicates that the binding relationship exists between the first CSI reporting configuration and the second CSI reporting configuration in the CSI reporting configuration group.

In a possible implementation, the first CSI-RS resource set and the second CSI-RS resource set occupy different time units.

In a possible implementation, the first transmission configuration indicator state includes a quasi co-location type D, or the second transmission configuration indicator state includes a quasi co-location type D. The first CSI-RS resource set and the second CSI-RS resource set occupy different time units.

In a possible implementation, the first CSI-RS resource set and the second CSI-RS resource set are not adjacent in time domain.

In a possible implementation, an interval between a time unit occupied by the first CSI-RS resource set and a time unit occupied by the second CSI-RS resource set is greater than or equal to a capability parameter reported by the terminal device.

In another application scenario, the communication apparatus 600 is used in a network device. For example, the communication apparatus 600 may be a network device, or may be a chip used in the network device, or another combined device, component, or the like that has a function of the network device. For example, the processing module 610 may be configured to perform all operations performed by the network device in any embodiment shown in FIG. 2, FIG. 4, or FIG. 5 except a receiving and sending operation. For example, the processing mode 610 is configured to measure CSI. In addition, for implementations of the sending module 620 and the receiving module 630, refer to the descriptions of the implementations of the sending module 620 and the receiving module 630.

One example

The sending module 620 is configured to send channel state information-reference signal CSI-RS resource configuration information to a terminal device. The CSI-RS resource configuration information includes a CSI-RS resource set, the CSI-RS resource set includes at least a first CSI-RS resource, an association relationship exists between a first port group corresponding to the first CSI-RS resource and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group.

The receiving module 630 receives CSI reported by the terminal device. The CSI is obtained by the terminal device by measuring the CSI based on the CSI-RS resource configuration information. The processing module 610 may perform further processing based on the CSI. The processing module 610 may also be configured to generate the CSI-RS resource configuration information.

In a possible implementation, the CSI-RS resource set further includes a second CSI-RS resource, and an association relationship exists between a port corresponding to the second CSI-RS resource and a third transmission configuration indicator state. The CSI includes a first measurement result obtained by performing CSI measurement on a CSI-RS resource in the CSI-RS resource set, and the first measurement result includes a first CSI parameter and a second CSI parameter. The first CSI parameter includes a first channel state information-reference signal resource indicator CRI, a CSI-RS resource indicated by the first CRI is the first CSI-RS resource, and a CSI parameter other than the first CRI in the first CSI parameter is determined on the first CSI-RS resource. The second CSI parameter includes a second CRI, a CSI-RS resource indicated by the second CRI is the second CSI-RS resource, and a CSI parameter other than the second CRI in the second CSI parameter is determined on the second CSI-RS resource.

In a possible implementation, the port in the first port group belongs to a first code division multiple access CDM group set, and the first CDM group set includes one or more CDM groups. An association relationship exists between the first CDM group set and the first transmission configuration indicator state. The port in the second port group belongs to a second code division multiple access CDM group set, and the second CDM group set includes one or more CDM groups. An association relationship exists between the second CDM group set and the second transmission configuration indicator state. An identifier of a CDM group in the first CDM group set is different from an identifier of a CDM group in the second CDM group set.

In a possible implementation, the first CSI-RS resource includes J CDM groups, where J is an integer greater than 1. The first CDM group set includes J1 CDM groups, and the J1 CDM groups are the first CDM group to the J1$^{th}$ CDM group of the J CDM groups. The second CDM group set includes J1 CDM groups, the J1 CDM groups are the (J-J1+1)$^{th}$ CDM group to the J$^{th}$ CDM group of the J CDM groups, and J1=floor(J/2), where floor() represents an operation of rounding down to the nearest integer.

In a possible implementation, a time-frequency resource corresponding to the port included in the first port group and a time-frequency resource corresponding to the port included in the second port group are located in different time units.

In a possible implementation, the first transmission configuration indicator state includes a quasi co-location type D, and/or the second transmission configuration indicator state includes a quasi co-location type D. A time-frequency resource corresponding to the port included in the first port group and a time-frequency resource corresponding to the port included in the second port group are located in different time units.

According to the invention, the time-frequency resource corresponding to the port included in the first port group and the time-frequency resource corresponding to the port included in the second port group are not adjacent in time domain.

According to the invention, a quantity of time units between the time-frequency resource corresponding to the port included in the first port group and the time-frequency resource corresponding to the port included in the second port group in time domain is greater than or equal to a capability parameter reported by the terminal device.

In a possible implementation, the sending module 620 is further configured to send mode indication information to the terminal device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N.

Another example which is not according to the invention:

The sending module 620 is configured to send first channel state information-reference signal CSI-RS resource configuration information to a terminal device. The first CSI-RS resource configuration information includes a CSI-RS resource set, the CSI-RS resource set includes at least a first CSI-RS resource group, the first CSI-RS resource group includes a first CSI-RS resource and a second CSI-RS resource, an association relationship exists between the first CSI-RS resource and a first transmission configuration indicator state, and an association relationship exists between the second CSI-RS resource and a second transmission configuration indicator state. An association relationship exists between the first CSI-RS resource and the second CSI-RS resource.

The receiving module 630 is configured to receive CSI reported by the terminal device. The CSI is obtained by the terminal device by measuring the CSI based on the first CSI-RS resource configuration information. The processing module 610 may perform further processing based on the CSI. The processing module 610 may also be configured to generate the first CSI-RS resource configuration information.

In a possible implementation, the first CSI resource configuration information further includes a third CSI-RS resource, and the third CSI-RS resource is associated with a third transmission configuration indicator state. The CSI includes a first measurement result obtained by performing CSI measurement on a CSI-RS resource in the CSI-RS resource set, and the first measurement result includes a first CSI parameter and a second CSI parameter. The first CSI parameter includes a first CRI, a CSI-RS resource indicated by the first CRI is the third CSI-RS resource, and a parameter other than the first CRI in the first CSI parameter is determined on the third CSI-RS resource. The second CSI parameter includes a second CRI, a CSI-RS resource indicated by the second CRI is the first CSI-RS resource group, and a parameter other than the second CRI in the second CSI parameter is determined on the first CSI-RS resource group.

In a possible implementation, the first CSI-RS resource and the second CSI-RS resource occupy different time units.

In a possible implementation, the first transmission configuration indicator state includes a quasi co-location type D, or the second transmission configuration indicator state includes a quasi co-location type D. The first CSI-RS resource and the second CSI-RS resource occupy different time units.

In a possible implementation, the first CSI-RS resource and the second CSI-RS resource are not adjacent in time domain.

In a possible implementation, an interval between a time unit occupied by the first CSI-RS resource and a time unit occupied by the second CSI-RS resource is greater than or equal to a capability parameter reported by the terminal device.

In a possible implementation, the sending module 620 is further configured to send mode indication information to the terminal device. The mode indication information indicates that each of N CSI-RS resources included in the CSI-RS resource set is associated with one of M sending modes, and the N CSI-RS resources include the first CSI-RS resource and the second CSI-RS resource, where N is an integer greater than 1, and M is a positive integer less than or equal to N.

In a possible implementation, a quantity of ports corresponding to the CSI-RS resources included in the first CSI-RS resource group is greater than 16.

In a possible implementation, the receiving module 630 is further configured to receive second CSI-RS resource configuration information from a network device. The second CSI-RS resource configuration information includes a CSI-RS resource set, an association relationship exists between a first port group corresponding to a first CSI-RS resource included in the CSI-RS resource set and a first transmission configuration indicator state, an association relationship exists between a second port group corresponding to the first CSI-RS resource and a second transmission configuration indicator state, the first port group includes at least one port, the second port group includes at least one port, and an identifier of a port included in the first port group is different from an identifier of a port included in the second port group. Before the CSI is measured based on the first resource configuration information, the receiving module 630 is further configured to receive a configuration indication from the network device. The configuration indication is used to indicate to use a first resource configuration manner, a resource configuration manner for the first CSI-RS resource configuration information is the first resource configuration manner, and a resource configuration manner for the second CSI-RS resource configuration information is a second resource configuration manner.

Still another example which is not according to the invention:

The sending module 620 is configured to send a CSI reporting configuration group to a terminal device. The CSI reporting configuration group includes a first CSI reporting configuration and a second CSI reporting configuration, the first CSI reporting configuration and the second CSI reporting configuration are used to configure a CSI reporting manner for the terminal device, the first CSI reporting configuration is associated with a first CSI-RS resource set, the second CSI reporting configuration is associated with a second CSI-RS resource set, an association relationship exists between the first CSI-RS resource set and a first transmission configuration indicator state, an association relationship exists between the second CSI-RS resource set and a second transmission configuration indicator state, a binding relationship exists between the first CSI reporting configuration and the second CSI reporting configuration, and the binding relationship is used to indicate to measure CSI on CSI-RS resource sets respectively associated with two CSI reporting configurations that have a binding relationship.

The receiving module 630 is configured to receive the CSI reported by the terminal device. The CSI is obtained by the terminal device by measuring the CSI based on the CSI reporting configuration group.

In a possible implementation, the CSI includes a measurement result obtained by performing CSI measurement on the first CSI-RS resource set associated with the first CSI reporting configuration, a measurement result obtained by performing CSI measurement on the second CSI-RS resource set associated with the second CSI reporting configuration, and a measurement result obtained by performing CSI measurement on the first CSI-RS resource set and the second CSI-RS resource set.

In a possible implementation, the sending module 620 is further configured to send indication information to the terminal device. The indication information indicates that the binding relationship exists between the first CSI reporting configuration and the second CSI reporting configuration in the CSI reporting configuration group.

In a possible implementation, the first CSI-RS resource set and the second CSI-RS resource set occupy different time units.

In a possible implementation, the first transmission configuration indicator state includes a quasi co-location type D, or the second transmission configuration indicator state includes a quasi co-location type D. The first CSI-RS resource set and the second CSI-RS resource set occupy different time units.

In a possible implementation, the first CSI-RS resource set and the second CSI-RS resource set are not adjacent in time domain.

In a possible implementation, an interval between a time unit occupied by the first CSI-RS resource set and a time unit occupied by the second CSI-RS resource set is greater than or equal to a capability parameter reported by the terminal device.

It should be understood that division of units in the foregoing apparatus is merely logical function division. During actual implementation, all or some of the units may be integrated into one physical entity, or may be physically separated. In addition, all the units in the apparatus may be implemented in a form in which a processor element invokes software, or may be implemented in a form of hardware; or some units may be implemented in a form in which a processor element invokes software, and some units are implemented in a form of hardware. For example, each unit may be a separately disposed processor element, or may be integrated into a chip of the apparatus for implementation. In addition, each unit may alternatively be stored in a memory in a form of a program to be invoked by a processor element of the apparatus to implement a function of the unit. In addition, all or some of the units may be integrated together, or may be implemented independently. The processor element herein may also be referred to as a processor, and may be an integrated circuit having a signal processing capability. In an implementation process, steps in the foregoing methods or the foregoing units may be implemented by using a hardware integrated logic circuit in a processor element, or may be implemented in a form in which a processor element invokes software.

For example, a unit in any one of the foregoing apparatuses may be one or more integrated circuits configured to implement the foregoing methods, for example, one or more application-specific integrated circuits (application specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus may be implemented in a form in which a processor element invokes a program, the processor element may be a general-purpose processor, for example, a CPU or another processor that can invoke the program. For still another example, the units may be integrated and implemented in a form of a system-on-a-chip (system-on-a-chip, SOC).

The foregoing unit for receiving (for example, the receiving module) is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending (for example, the sending module) is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, input data required by the processor 710 to run the instructions, or data generated after the processor 710 runs the instructions.

When the communication apparatus 700 is configured to implement the methods in the foregoing method embodiments, the processor 710 is configured to implement a function of the processing module 610, and the interface circuit 720 is configured to implement functions of the sending module 620 and the receiving module 630.

When the communication apparatus is a chip used in a terminal device, the chip of the terminal device implements a function of the terminal device in the foregoing method embodiments. The chip of the terminal device receives information from another module (for example, a radio frequency module or an antenna) in the terminal device, where the information is sent by a mobility management network element to the terminal device. Alternatively, the chip of the terminal device sends information to another module (for example, a radio frequency module or an antenna) in the terminal device, where the information is sent by the terminal device to a network device.

When the communication apparatus is a chip used in a network device, the chip of the network device implements a function of the network device in the foregoing method embodiments. The chip of the network device receives information from another module (for example, a radio frequency module or an antenna) in a mobility management network element, where the information is sent by a terminal device to the network device. Alternatively, the chip of the network device sends information to another module (for example, a radio frequency module or an antenna) in the network device, where the information is sent by the network device to a terminal device.

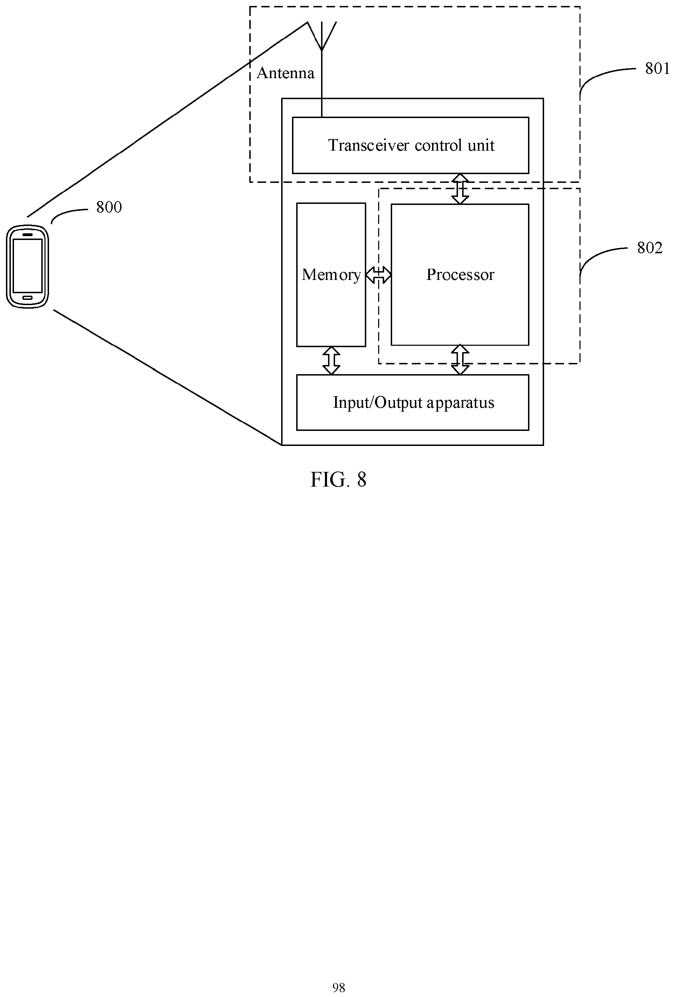

As shown in FIG. 8, this application further provides a schematic diagram of a structure of a terminal device. The terminal device may be configured to implement a function of the terminal device in the foregoing method embodiments. For ease of description, FIG. 8 shows only main components of the terminal device. As shown in FIG. 8, a terminal device 800 may include a processor 802, a memory, and a transceiver control unit 801, and optionally, may further include an antenna and/or an input/output apparatus. The processor may be configured to: process a communication protocol and communication data, control user equipment, and execute a software program. The memory may store a software program and/or data. The transceiver control unit may be configured to perform conversion between a baseband signal and a radio frequency signal and process the radio frequency signal. The transceiver control unit 801 and the antenna together may also be referred to as a transceiver, and may be configured to receive and send a radio frequency signal. The input/output apparatus, for example, a touchscreen, a display, or a keyboard, may be configured to receive data input by a user and output data to the user.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

The various illustrative logical units and circuits described in embodiments of this application may implement or operate the described function by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a random access memory (random access memory, RAM), a flash memory, a read-only memory (read-only memory, ROM), an EPROM memory, an EEPROM memory, a register, a hard disk, a removable magnetic disk, a CD-ROM, or a storage medium of any other form in the art. For example, the storage medium may connect to a processor, so that the processor can read information from the storage medium and write information into the storage medium. Alternatively, the storage medium may be integrated into the processor. The processor and the storage medium may be disposed in an ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In one or more exemplary designs, the functions described in embodiments of this application may be implemented by using hardware, software, firmware, or any combination thereof. If the functions are implemented by using the software, these functions may be stored in a computer-readable medium or are transmitted to the computer-readable medium in a form of one or more instructions or code. The computer-readable medium includes a computer storage medium and a communication medium that enables a computer program to move from one place to another. The storage medium may be an available medium that can be accessed by any general-purpose or dedicated computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of an instruction or a data structure and in a form that can be read by a general-purpose or dedicated computer or a general-purpose or dedicated processor. In addition, any connection may be appropriately defined as a computer-readable medium. For example, if software is transmitted from a website, a server, or another remote resource by using a coaxial cable, an optical fiber computer, a twisted pair, or a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (digital versatile disc, DVD), a floppy disk, and a Blu-ray disc. The disc usually copies data in a magnetic manner, and the disk usually copies data optically in a laser manner. The foregoing combination may also be included in the computer-readable medium.

A person skilled in the art should be aware that in the foregoing one or more examples, functions described in embodiments of this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium that can be accessed by a general-purpose or dedicated computer.

In the foregoing specific implementations, the objectives, technical solutions, and beneficial effects in embodiments of this application are further described in detail. It should be understood that the foregoing descriptions are merely specific implementations of embodiments of this application, but are not intended to limit the protection scope of embodiments of this application. Any modification falling within the scope of the claims shall fall within the protection scope of this application. The foregoing descriptions in this specification of this application may enable a person skilled in the art to use or implement the content of embodiments of this application. Any modification based on the disclosed content shall be considered clear in the art. The basic principles described in embodiments of this application are applied to other variations without departing from the scope of this application. Therefore, the content disclosed in embodiments of this application is not limited to the described embodiments and designs, but may also be extended to a maximum scope consistent with the principles and disclosed new features of this application.

**Claims**

1. A method for reporting channel state information performed by a terminal device, the method comprising the steps of:

   • receiving (S 201) channel state information-reference signal, CSI-RS, resource configuration information from a network device,

      ○ wherein the CSI-RS resource configuration information comprises a CSI-RS resource set, the CSI-RS resource set comprises at least a first CSI-RS resource, an association relationship exists between a first port group corresponding to the first CSI-RS resource and a first transmission configuration indicator state, an association relationship exists between a second port group corresponding to the first CSI-RS resource and a second transmission configuration indicator state, the first port group comprises at least one port, the second port group comprises at least one port,
      ○ wherein an identifier of a port comprised in the first port group is different from an identifier of a port comprised in the second port group,
      ○ wherein a time-frequency resource corresponding to the port comprised in the first port group and a time-frequency resource corresponding to the port comprised in the second port group are located in different time units, and the time-frequency resource corresponding to the port comprised in the first port group and the time-frequency resource corresponding to the port comprised in the second port group are not adjacent in time domain, and a quantity of time units between the time-frequency resource corresponding to the port comprised in the first port group and the time-frequency resource corresponding to the port comprised in the second port group in time domain is greater than or equal to a capability parameter reported by the terminal device to the network device; and

   • measuring (S 202) CSI based on the CSI-RS resource configuration information, and reporting the CSI to the network device.

2. The method according to claim 1, wherein the CSI-RS resource set further comprises a second CSI-RS resource, and an association relationship exists between a port corresponding to the second CSI-RS resource and a third transmission configuration indicator state; and
   the CSI comprises a first measurement result obtained by performing CSI measurement on a CSI-RS resource in the CSI-RS resource set, and the first measurement result comprises a first CSI parameter and a second CSI parameter, wherein:
   the first CSI parameter comprises a first channel state information-reference signal resource indicator CRI, a CSI-RS resource indicated by the first CRI is the first CSI-RS resource, and a CSI parameter other than the first CRI in the first CSI parameter is determined on the first CSI-RS resource; and the second CSI parameter comprises a second CRI, a CSI-RS resource indicated by the second CRI is the second CSI-RS resource, and a CSI parameter other than the second CRI in the second CSI parameter is determined on the second CSI-RS resource.

3. The method according to claim 1, wherein:
   the port in the first port group belongs to a first code division multiple access, CDM, group set, the first CDM group set comprises one or more CDM groups, and an association relationship exists between the first CDM group set and the first transmission configuration indicator state; the port in the second port group belongs to a second code division multiple access, CDM, group set, the second CDM group set comprises one or more CDM groups, and an association relationship exists between the second CDM group set and the second transmission configuration indicator state; and an identifier of a CDM group in the first CDM group set is different from an identifier of a CDM group in the second CDM group set; and wherein: the first CSI-RS resource comprises J CDM groups, wherein J is an integer greater than 1; the first CDM group set comprises J1 CDM groups, and the J1 CDM groups are the first CDM group to the J1$^{th}$ CDM group of the J CDM groups; and the second CDM group set comprises J1 CDM groups, the J1 CDM groups are the $(J-J1+1)^{th}$ CDM group to the J$^{th}$ CDM group of the J CDM groups, and J1=floor(J/2), wherein floor() represents an operation of rounding down to the nearest integer.

4. The method according to any one of claims 2 to 3, further comprising:
   receiving mode indication information from the network device, wherein the mode indication information indicates that each of N CSI-RS resources comprised in the CSI-RS resource set is associated with one of M sending modes, and the N CSI-RS resources comprise the first CSI-RS resource and the second CSI-RS resource, wherein N is an integer greater than 1, and M is a positive integer less than or equal to N.

5. A method for reporting channel state information performed by a network device, the method comprising the steps of:

• sending (S 201) channel state information-reference signal CSI-RS resource configuration information to a terminal device,

◦ wherein the CSI-RS resource configuration information comprises a CSI-RS resource set, the CSI-RS resource set comprises at least a first CSI-RS resource, an association relationship exists between a first port group corresponding to the first CSI-RS resource and a first transmission configuration indicator state, an association relationship exists between a second port group corresponding to the first CSI-RS resource and a second transmission configuration indicator state, the first port group comprises at least one port, the second port group comprises at least one port,
◦ wherein an identifier of a port comprised in the first port group is different from an identifier of a port comprised in the second port group,
◦ wherein a time-frequency resource corresponding to the port comprised in the first port group and a time-frequency resource corresponding to the port comprised in the second port group are located in different time units, and the time-frequency resource corresponding to the port comprised in the first port group and the time-frequency resource corresponding to the port comprised in the second port group are not adjacent in time domain, and a quantity of time units between the time-frequency resource corresponding to the port comprised in the first port group and the time-frequency resource corresponding to the port comprised in the second port group in time domain is greater than or equal to a capability parameter reported by the terminal device to the network device; and

• receiving (S 203) CSI reported by the terminal device, wherein the CSI is obtained by the terminal device by measuring the CSI based on the CSI-RS resource configuration information.

6. The method according to claim 5, wherein the CSI-RS resource set further comprises a second CSI-RS resource, and an association relationship exists between a port corresponding to the second CSI-RS resource and a third transmission configuration indicator state; and the CSI comprises a first measurement result obtained by performing CSI measurement on a CSI-RS resource in the CSI-RS resource set, and the first measurement result comprises a first CSI parameter and a second CSI parameter, wherein: the first CSI parameter comprises a first channel state information-reference signal resource indicator CRI, a CSI-RS resource indicated by the first CRI is the first CSI-RS resource, and a CSI parameter other than the first CRI in the first CSI parameter is determined on the first CSI-RS resource; and the second CSI parameter comprises a second CRI, a CSI-RS resource indicated by the second CRI is the second CSI-RS resource, and a CSI parameter other than the second CRI in the second CSI parameter is determined on the second CSI-RS resource.

7. The method according to claim 5, wherein:

the port in the first port group belongs to a first code division multiple access, CDM, group set, the first CDM group set comprises one or more CDM groups, and an association relationship exists between the first CDM group set and the first transmission configuration indicator state; the port in the second port group belongs to a second code division multiple access CDM group set, the second CDM group set comprises one or more CDM groups, and an association relationship exists between the second CDM group set and the second transmission configuration indicator state; and an identifier of a CDM group in the first CDM group set is different from an identifier of a CDM group in the second CDM group set; and wherein: the first CSI-RS resource comprises J CDM groups, wherein J is an integer greater than 1;the first CDM group set comprises **J1** CDM groups, and the **J1** CDM groups are the first CDM group to the $J1^{th}$ CDM group of the J CDM groups; and the second CDM group set comprises J1 CDM groups, the J1 CDM groups are the $(J-J1+1)^{th}$ CDM group to the $J^{th}$ CDM group of the J CDM groups, and J1=floor(J/2), wherein floor() represents an operation of rounding down to the nearest integer.

8. The method according to any one of claims 5 to 7, further comprising: sending mode indication information to the terminal device, wherein the mode indication information indicates that each of N CSI-RS resources comprised in the CSI-RS resource set is associated with one of M sending modes, and the N CSI-RS resources comprise the first CSI-RS resource and the second CSI-RS resource, wherein N is an integer greater than 1, and M is a positive integer less than or equal to N.

9. A terminal device configured to perform any of the methods according to claims 1 - 4.

**10.** A network device configured to perform any of the methods according to claims 5 - 8.

**11.** A computer-readable storage medium, wherein the computer-readable storage medium stores computer instructions, and when the computer instructions are executed by a terminal device, the terminal device is caused to perform any of the methods according to claims 1 - 4.

**12.** A computer-readable storage medium, wherein the computer-readable storage medium stores computer instructions, and when the computer instructions are executed by a network device, the network device is caused to perform any of the methods according to claims 5 - 8.

**Patentansprüche**

**1.** Verfahren zum Melden von Kanalstatusinformationen, das von einem Endgerät durchgeführt wird, wobei das Verfahren die Schritte umfasst:

> • Empfangen (S 201) von Kanalstatusinformationen-Referenzsignal(CSI-RS)-Ressourcenkonfigurationsinformationen von einer Netzwerkvorrichtung,

>> ∘ wobei die CSI-RS-Ressourcenkonfigurationsinformationen einen CSI-RS-Ressourcensatz umfassen, der CSI-RS-Ressourcensatz mindestens eine erste CSI-RS-Ressource umfasst, eine Zuordnungsbeziehung zwischen einer ersten Portgruppe, die der ersten CSI-RS-Ressource entspricht, und einem ersten Übertragungskonfigurationsindikatorstatus besteht, eine Zuordnungsbeziehung zwischen einer zweiten Portgruppe, die der ersten CSI-RS-Ressource entspricht, und einem zweiten Übertragungskonfigurationsindikatorstatus besteht, die erste Portgruppe mindestens einen Port umfasst, die zweite Portgruppe mindestens einen Port umfasst,
>> o wobei sich eine Kennung eines in der ersten Portgruppe enthaltenen Ports von einer Kennung eines in der zweiten Portgruppe enthaltenen Ports unterscheidet,
>> o wobei sich eine Zeit-Frequenz-Ressource, die dem in der ersten Portgruppe enthaltenen Port entspricht, und eine Zeit-Frequenz-Ressource, die dem in der zweiten Portgruppe enthaltenen Port entspricht, in unterschiedlichen Zeiteinheiten befinden und die Zeit-Frequenz-Ressource, die dem in der ersten Portgruppe enthaltenen Port entspricht, und die Zeit-Frequenz-Ressource, die dem in der zweiten Portgruppe enthaltenen Port entspricht, im Zeitbereich nicht benachbart sind und eine Anzahl an Zeiteinheiten zwischen der Zeit-Frequenz-Ressource, die dem in der ersten Portgruppe enthaltenen Port entspricht, und der Zeit-Frequenz-Ressource, die dem in der zweiten Portgruppe enthaltenen Port entspricht, im Zeitbereich größer oder gleich einem vom Endgerät an die Netzwerkvorrichtung gemeldeten Fähigkeitsparameter ist; und

> • Messen (S 202) von CSI basierend auf den CSI-RS-Ressourcenkonfigurationsinformationen und Melden der CSI an die Netzwerkvorrichtung.

**2.** Verfahren nach Anspruch 1, wobei der CSI-RS-Ressourcensatz ferner eine zweite CSI-RS-Ressource umfasst und eine Zuordnungsbeziehung zwischen einem der zweiten CSI-RS-Ressource entsprechenden Port und einem dritten Übertragungskonfigurationsindikatorstatus besteht und die CSI ein erstes Messergebnis, das durch Durchführen einer CSI-Messung auf einer CSI-RS-Ressource im CSI-RS-Ressourcensatz erhalten wurde, umfassen und das erste Messergebnis einen ersten CSI-Parameter und einen zweiten CSI-Parameter umfasst, wobei: der erste CSI-Parameter einen ersten Kanalstatusinformationen-Referenzsignal-Ressourcenindikator, CRI, umfasst, eine durch den ersten CRI angegebene CSI-RS-Ressource die erste CSI-RS-Ressource ist und ein anderer CSI-Parameter als der erste CRI im ersten CSI-Parameter auf der ersten CSI-RS-Ressource bestimmt wird und der zweite CSI-Parameter einen zweiten CRI umfasst, eine durch den zweiten CRI angegebene CSI-RS-Ressource die zweite CSI-RS-Ressource ist und ein anderer CSI-Parameter als der zweite CRI im zweiten CSI-Parameter auf der zweiten CSI-RS-Ressource bestimmt wird.

**3.** Verfahren nach Anspruch 1, wobei: der Port in der ersten Portgruppe zu einem ersten Codemultiplexverfahren(CDM)-Gruppensatz gehört, der erste CDM-Gruppensatz eine oder mehrere CDM-Gruppe(n) umfasst und zwischen dem ersten CDM-Gruppensatz und dem ersten Übertragungskonfigurationsindikatorstatus eine Zuordnungsbeziehung besteht; der Port in der zweiten Portgruppe zu einem zweiten Codemultiplexverfahren(CDM)-Gruppensatz gehört, der zweite CDM-Gruppensatz eine oder mehrere CDM-Gruppe(n) umfasst und zwischen dem zweiten CDM-Gruppensatz und dem zweiten Übertragungskonfigurationsindikatorstatus eine Zuordnungsbeziehung besteht und sich eine Kennung einer CDM-Gruppe im ersten CDM-Gruppensatz von einer Kennung einer CDM-Gruppe im zweiten CDM-Gruppensatz unterscheidet und wobei:
die erste CSI-RS-Ressource J CDM-Gruppen umfasst, wobei J eine Ganzzahl größer als 1 ist; der erste CDM-Gruppensatz J1 CDM-Gruppen umfasst und die J1 CDM-Gruppen die erste CDM-Gruppe bis zur J1-ten CDM-Gruppe der J CDM-Gruppen sind und der zweite CDM-Gruppensatz J1 CDM-Gruppen umfasst, die J1 CDM-Gruppen die (J-J1+1)-te CDM-Gruppe bis zur J-ten CDM-Gruppe der J CDM-Gruppen sind und J1=floor(J/2), wobei floor() für eine Operation zum Abrunden auf die nächste Ganzzahl steht.

4. Verfahren nach einem der Ansprüche 2 bis 3, das ferner umfasst:
Empfangen von Modusangabeinformationen von der Netzwerkvorrichtung, wobei die Modusangabeinformationen angeben, dass jede von N CSI-RS-Ressourcen, die im CSI-RS-Ressourcensatz enthalten sind, einem von M Sendemodi zugeordnet ist, und die N CSI-RS-Ressourcen die erste CSI-RS-Ressource und die zweite CSI-RS-Ressource umfassen, wobei N eine Ganzzahl größer als 1 ist und M eine positive Ganzzahl kleiner oder gleich N ist.

5. Verfahren zum Melden von Kanalstatusinformationen, das von einer Netzwerkvorrichtung durchgeführt wird, wobei das Verfahren die Schritte umfasst:

   • Senden (S 201) von Kanalstatusinformationen-Referenzsignal(CSI-RS)-Ressourcenkonfigurationsinformationen an ein Endgerät,

      ◦ wobei die CSI-RS-Ressourcenkonfigurationsinformationen einen CSI-RS-Ressourcensatz umfassen, der CSI-RS-Ressourcensatz mindestens eine erste CSI-RS-Ressource umfasst, eine Zuordnungsbeziehung zwischen einer ersten Portgruppe, die der ersten CSI-RS-Ressource entspricht, und einem ersten Übertragungskonfigurationsindikatorstatus besteht, eine Zuordnungsbeziehung zwischen einer zweiten Portgruppe, die der ersten CSI-RS-Ressource entspricht, und einem zweiten Übertragungskonfigurationsindikatorstatus besteht, die erste Portgruppe mindestens einen Port umfasst, die zweite Portgruppe mindestens einen Port umfasst,
      ◦ wobei sich eine Kennung eines in der ersten Portgruppe enthaltenen Ports von einer Kennung eines in der zweiten Portgruppe enthaltenen Ports unterscheidet,
      ◦ wobei sich eine Zeit-Frequenz-Ressource, die dem in der ersten Portgruppe enthaltenen Port entspricht, und eine Zeit-Frequenz-Ressource, die dem in der zweiten Portgruppe enthaltenen Port entspricht, in unterschiedlichen Zeiteinheiten befinden und die Zeit-Frequenz-Ressource, die dem in der ersten Portgruppe enthaltenen Port entspricht, und die Zeit-Frequenz-Ressource, die dem in der zweiten Portgruppe enthaltenen Port entspricht, im Zeitbereich nicht benachbart sind und eine Anzahl an Zeiteinheiten zwischen der Zeit-Frequenz-Ressource, die dem in der ersten Portgruppe enthaltenen Port entspricht, und der Zeit-Frequenz-Ressource, die dem in der zweiten Portgruppe enthaltenen Port entspricht, im Zeitbereich größer oder gleich einem vom Endgerät an die Netzwerkvorrichtung gemeldeten Fähigkeitsparameter ist; und

   • Empfangen (S 203) von vom Endgerät gemeldeten CSI, wobei die CSI durch das Endgerät durch Messen der CSI basierend auf den CSI-RS-Ressourcenkonfigurationsinformationen erhalten werden.

6. Verfahren nach Anspruch 5, wobei der CSI-RS-Ressourcensatz ferner eine zweite CSI-RS-Ressource umfasst und eine Zuordnungsbeziehung zwischen einem der zweiten CSI-RS-Ressource entsprechenden Port und einem dritten Übertragungskonfigurationsindikatorstatus besteht und die CSI ein erstes Messergebnis, das durch Durchführen einer CSI-Messung auf einer CSI-RS-Ressource im CSI-RS-Ressourcensatz erhalten wurde, umfassen und das erste Messergebnis einen ersten CSI-Parameter und einen zweiten CSI-Parameter umfasst, wobei:
der erste CSI-Parameter einen ersten Kanalstatusinformationen-Referenzsignal-Ressourcenindikator, CRI, umfasst, eine durch den ersten CRI angegebene CSI-RS-Ressource die erste CSI-RS-Ressource ist und ein anderer CSI-Parameter als der erste CRI im ersten CSI-Parameter auf der ersten CSI-RS-Ressource bestimmt wird und der zweite CSI-Parameter einen zweiten CRI umfasst, eine durch den zweiten CRI angegebene CSI-RS-Ressource die zweite CSI-RS-Ressource ist und ein anderer CSI-Parameter als der zweite CRI im zweiten CSI-Parameter auf der zweiten CSI-RS-Ressource bestimmt wird.

7. Verfahren nach Anspruch 5, wobei:

   der Port in der ersten Portgruppe zu einem ersten Codemultiplexverfahren(CDM)-Gruppensatz gehört, der erste CDM-Gruppensatz eine oder mehrere CDM-Gruppe(n) umfasst und zwischen dem ersten CDM-Gruppensatz und dem ersten Übertragungskonfigurationsindikatorstatus eine Zuordnungsbeziehung besteht;

der Port in der zweiten Portgruppe zu einem zweiten Codemultiplexverfahren(CDM)-Gruppensatz, gehört, der zweite CDM-Gruppensatz eine oder mehrere CDM-Gruppe(n) umfasst und zwischen dem zweiten CDM-Gruppensatz und dem zweiten Übertragungskonfigurationsindikatorstatus eine Zuordnungsbeziehung besteht; und

sich eine Kennung einer CDM-Gruppe im ersten CDM-Gruppensatz von einer Kennung einer CDM-Gruppe im zweiten CDM-Gruppensatz unterscheidet und wobei:

die erste CSI-RS-Ressource J CDM-Gruppen umfasst, wobei J eine Ganzzahl größer als 1 ist; der erste CDM-Gruppensatz J1 CDM-Gruppen umfasst und die J1 CDM-Gruppen die erste CDM-Gruppe bis zur J1-ten CDM-Gruppe der J CDM-Gruppen sind und der zweite CDM-Gruppensatz J1 CDM-Gruppen umfasst, die J1 CDM-Gruppen die (J-J1+1)-te CDM-Gruppe bis zur J-ten CDM-Gruppe der J CDM-Gruppen sind und J1=floor(J/2), wobei floor() für eine Operation zum Abrunden auf die nächste Ganzzahl steht.

8. Verfahren nach einem der Ansprüche 5 bis 7, das ferner umfasst:

Senden von Modusangabeinformationen an das Endgerät, wobei die Modusangabeinformationen angeben, dass jede von N CSI-RS-Ressourcen, die im CSI-RS-Ressourcensatz enthalten sind, einem von M Sendemodi zugeordnet ist und die N CSI-RS-Ressourcen die erste CSI-RS-Ressource und die zweite CSI-RS-Ressource umfassen, wobei N eine Ganzzahl größer als 1 ist und M eine positive Ganzzahl kleiner oder gleich N ist.

9. Endgerät, das konfiguriert ist, um ein beliebiges der Verfahren nach einem der Ansprüche 1 bis 4 durchzuführen.

10. Netzwerkvorrichtung, die konfiguriert ist, um ein beliebiges der Verfahren nach einem der Ansprüche 5 bis 8 durchzuführen.

11. Computerlesbares Speicherungsmedium, wobei das computerlesbare Speicherungsmedium Computeranweisungen speichert und, wenn die Computeranweisungen durch ein Endgerät ausgeführt werden, das Endgerät veranlasst wird, ein beliebiges der Verfahren nach einem der Ansprüche 1 bis 4 durchzuführen.

12. Computerlesbares Speicherungsmedium, wobei das computerlesbare Speicherungsmedium Computeranweisungen speichert und, wenn die Computeranweisungen durch eine Netzwerkvorrichtung ausgeführt werden, die Netzwerkvorrichtung veranlasst wird, ein beliebiges der Verfahren nach einem der Ansprüche 5 bis 8 durchzuführen.

**Revendications**

1. Procédé de rapport d'informations d'état de canal réalisé par un dispositif terminal, le procédé comprenant les étapes consistant à :

• recevoir (S 201) des informations de configuration de ressource de signal de référence d'informations d'état de canal, CSI-RS, à partir d'un dispositif de réseau,

o dans lequel les informations de configuration de ressource CSI-RS comprennent un ensemble de ressources CSI-RS, l'ensemble de ressources CSI-RS comprend au moins une première ressource CSI-RS, une relation d'association existe entre un premier groupe de ports correspondant à la première ressource CSI-RS et un premier état d'indicateur de configuration de transmission, une relation d'association existe entre un second groupe de ports correspondant à la première ressource CSI-RS et un deuxième état d'indicateur de configuration de transmission, le premier groupe de ports comprend au moins un port, le second groupe de ports comprend au moins un port,

o dans lequel un identifiant d'un port compris dans le premier groupe de ports est différent d'un identifiant d'un port compris dans le second groupe de ports,

o dans lequel une ressource temps-fréquence correspondant au port compris dans le premier groupe de ports et une ressource temps-fréquence correspondant au port compris dans le second groupe de ports sont situées dans des unités de temps différentes, et la ressource temps-fréquence correspondant au port compris dans le premier groupe de ports et la ressource temps-fréquence correspondant au port compris dans le second groupe de ports ne sont pas adjacentes dans un domaine temporel, et une quantité d'unités de temps entre la ressource temps-fréquence correspondant au port compris dans le premier groupe de ports et la ressource temps-fréquence correspondant au port compris dans le second groupe de ports dans le domaine temporel est supérieure ou égale à un paramètre de capacité rapporté par le dispositif terminal au dispositif de réseau ; et

• mesurer (S 202) des CSI sur la base des informations de configuration de ressource CSI-RS, et rapporter les CSI au dispositif de réseau.

**2.** Procédé selon la revendication 1, dans lequel l'ensemble de ressources CSI-RS comprend en outre une seconde ressource CSI-RS, et une relation d'association existe entre un port correspondant à la seconde ressource CSI-RS et un troisième état d'indicateur de configuration de transmission ; et

les CSI comprennent un premier résultat de mesure obtenu en réalisant une mesure CSI sur une ressource CSI-RS dans l'ensemble de ressources CSI-RS, et le premier résultat de mesure comprend un premier paramètre CSI et un second paramètre CSI, dans lequel :

le premier paramètre CSI comprend un premier indicateur de ressource de signal de référence d'information d'état de canal CRI, une ressource CSI-RS indiquée par le premier CRI est la première ressource CSI-RS, et un paramètre CSI autre que le premier CRI dans le premier paramètre CSI est déterminé sur la première ressource CSI-RS ; et le second paramètre CSI comprend un second CRI, une ressource CSI-RS indiquée par le second CRI est la seconde ressource CSI-RS, et un paramètre CSI autre que le second CRI dans le second paramètre CSI est déterminé sur la seconde ressource CSI-RS.

**3.** Procédé selon la revendication 1, dans lequel :

le port dans le premier groupe de ports appartient à un premier ensemble de groupes d'accès multiple par répartition en code, CDM, le premier ensemble de groupes CDM comprend un ou plusieurs groupes CDM, et une relation d'association existe entre le premier ensemble de groupes CDM et le premier état d'indicateur de configuration de transmission ; le port dans le second groupe de ports appartient à un second ensemble de groupes d'accès multiple par répartition en code, CDM, le second ensemble de groupes CDM comprend un ou plusieurs groupes CDM, et une relation d'association existe entre le second ensemble de groupes CDM et le deuxième état d'indicateur de configuration de transmission ; et un identifiant d'un groupe CDM dans le premier ensemble de groupes CDM est différent d'un identifiant d'un groupe CDM dans le second ensemble de groupes CDM ; et dans lequel : la première ressource CSI-RS comprend J groupes CDM, dans lequel J est un nombre entier supérieur à 1 ;

le premier ensemble de groupes CDM comprend J1 groupes CDM, et les J1 groupes CDM sont le premier groupe CDM jusqu'au J1$^e$ groupe CDM des J groupes CDM ; et

le second ensemble de groupes CDM comprend J1 groupes CDM, les J1 groupes CDM sont le $(J - J1 + 1)^e$ groupe CDM jusqu'au J$^e$ groupe CDM des J groupes CDM, et J1 = plancher(J/2), où plancher() représente une opération d'arrondi vers le bas à l'entier le plus proche.

**4.** Procédé selon l'une quelconque des revendications 2 à 3, comprenant en outre :

la réception d'informations d'indication de mode à partir du dispositif de réseau, dans lequel les informations d'indication de mode indiquent que chacune des N ressources CSI-RS comprises dans l'ensemble de ressources CSI-RS est associée à l'un de M modes d'envoi, et les N ressources CSI-RS comprennent la première ressource CSI-RS et la seconde ressource CSI-RS, dans lequel N est un nombre entier supérieur à 1, et M un nombre entier positif inférieur ou égal à N.

**5.** Procédé de rapport d'informations d'état de canal réalisé par un dispositif de réseau, le procédé comprenant les étapes consistant à :

• envoyer (S 201) des informations de configuration de ressource de signal de référence d'informations d'état de canal CSI-RS à un dispositif terminal,

o dans lequel les informations de configuration de ressource CSI-RS comprennent un ensemble de ressources CSI-RS, l'ensemble de ressources CSI-RS comprend au moins une première ressource CSI-RS, une relation d'association existe entre un premier groupe de ports correspondant à la première ressource CSI-RS et un premier état d'indicateur de configuration de transmission, une relation d'association existe entre un second groupe de ports correspondant à la première ressource CSI-RS et un deuxième état d'indicateur de configuration de transmission, le premier groupe de ports comprend au moins un port, le second groupe de ports comprend au moins un port,

o dans lequel un identifiant d'un port compris dans le premier groupe de ports est différent d'un identifiant d'un port compris dans le second groupe de ports,

o dans lequel une ressource temps-fréquence correspondant au port compris dans le premier groupe de ports et une ressource temps-fréquence correspondant au port compris dans le second groupe de ports sont situées dans des unités de temps différentes, et la ressource temps-fréquence correspondant au port compris dans le premier groupe de ports et la ressource temps-fréquence correspondant au port compris dans le second groupe de ports ne sont pas adjacentes dans un domaine temporel, et une quantité d'unités de temps entre la ressource temps-fréquence correspondant au port compris dans le premier groupe de ports et la ressource temps-fréquence correspondant au port compris dans le second groupe de ports dans le domaine temporel est supérieure ou égale à un paramètre de capacité rapporté par le dispositif terminal au dispositif de réseau ; et

• recevoir (S 203) des CSI rapportées par le dispositif terminal, dans lequel les CSI sont obtenues par le dispositif terminal en mesurant les CSI sur la base des informations de configuration de ressources CSI-RS.

6. Procédé selon la revendication 5, dans lequel l'ensemble de ressources CSI-RS comprend en outre une seconde ressource CSI-RS, et une relation d'association existe entre un port correspondant à la seconde ressource CSI-RS et un troisième état d'indicateur de configuration de transmission ; et les CSI comprennent un premier résultat de mesure obtenu en réalisant une mesure CSI sur une ressource CSI-RS dans l'ensemble de ressources CSI-RS, et le premier résultat de mesure comprend un premier paramètre CSI et un second paramètre CSI, dans lequel :
le premier paramètre CSI comprend un premier indicateur de ressource de signal de référence d'information d'état de canal CRI, une ressource CSI-RS indiquée par le premier CRI est la première ressource CSI-RS, et un paramètre CSI autre que le premier CRI dans le premier paramètre CSI est déterminé sur la première ressource CSI-RS ; et le second paramètre CSI comprend un second CRI, une ressource CSI-RS indiquée par le second CRI est la seconde ressource CSI-RS, et un paramètre CSI autre que le second CRI dans le second paramètre CSI est déterminé sur la seconde ressource CSI-RS.

7. Procédé selon la revendication 5, dans lequel :

le port dans le premier groupe de ports appartient à un premier ensemble de groupes d'accès multiple par répartition en code, CDM, le premier ensemble de groupes CDM comprend un ou plusieurs groupes CDM, et une relation d'association existe entre le premier ensemble de groupes CDM et le premier état d'indicateur de configuration de transmission ;
le port dans le second groupe de ports appartient à un second ensemble de groupes d'accès multiple par répartition en code CDM, le second ensemble de groupes CDM comprend un ou plusieurs groupes CDM, et une relation d'association existe entre le second ensemble de groupes CDM et le deuxième état d'indicateur de configuration de transmission ; et un identifiant d'un groupe CDM dans le premier ensemble de groupes CDM est différent d'un identifiant d'un groupe CDM dans le second ensemble de groupes CDM ; et dans lequel :
la première ressource CSI-RS comprend J groupes CDM, dans lequel J est un nombre entier supérieur à 1 ; le premier ensemble de groupes CDM comprend J1 groupes CDM, et les J1 groupes CDM sont le premier groupe CDM jusqu'au J1$^e$ groupe CDM des J groupes CDM ; et le second ensemble de groupes CDM comprend J1 groupes CDM, les J1 groupes CDM sont le $(J - J1 + 1)^e$ groupe CDM jusqu'au J$^e$ groupe CDM des J groupes CDM, et J1 = plancher(J/2), où plancher() représente une opération d'arrondi vers le bas à l'entier le plus proche.

8. Procédé selon l'une quelconque des revendications 5 à 7, comprenant en outre :
l'envoi d'informations d'indication de mode au dispositif terminal, dans lequel les informations d'indication de mode indiquent que chacune des N ressources CSI-RS comprises dans l'ensemble de ressources CSI-RS est associée à l'un de M modes d'envoi, et que les N ressources CSI-RS comprennent la première ressource CSI-RS et la seconde ressource CSI-RS, dans lequel N est un nombre entier supérieur à 1 et M un nombre entier positif inférieur ou égal à N.

9. Dispositif terminal configuré pour réaliser l'un quelconque des procédés selon les revendications 1 à 4.

10. Dispositif de réseau configuré pour réaliser l'un quelconque des procédés selon les revendications 5 à 8.

11. Support de stockage lisible par ordinateur, dans lequel le support de stockage lisible par ordinateur stocke des instructions informatiques, et, lorsque les instructions informatiques sont exécutées par un dispositif terminal, le dispositif terminal est amené à réaliser l'un quelconque des procédés selon les revendications 1 à 4.

12. Support de stockage lisible par ordinateur, dans lequel le support de stockage lisible par ordinateur stocke des instructions informatiques, et lorsque les instructions informatiques sont exécutées par un dispositif de réseau, le dispositif de réseau est amené à réaliser l'un quelconque des procédés selon les revendications 5 à 8.

FIG. 1

94

Terminal device

Network device

S201: CSI-RS resource configuration information, where different port groups that belong to a same CSI-RS resource in a CSI-RS resource set and that are configured for the terminal device are associated with different TCI states

S202: Measure CSI based on the CSI-RS resource configuration information

S203: Report the CSI

FIG. 2

TRP 1

TRP 2

$H_1$

$H_2$

FIG. 3

95

```
┌─────────────────┐                                    ┌─────────────────┐
│ Terminal device │                                    │ Network device  │
└────────┬────────┘                                    └────────┬────────┘
         │                                                      │
         │  S401: CSI-RS resource configuration information,    │
         │  where different CSI-RS resources that belong to a   │
         │       same CSI-RS resource group and that are        │
         │  configured for the terminal device are associated   │
         │           with different TCI states                  │
         │──────────────────────────────────────────────────────▶│
         │                                                      │
         │                    ┌─────────────────────────────────────────┐
         │                    │ S402: Measure CSI based on the CSI-RS   │
         │                    │    resource configuration information   │
         │                    └─────────────────────────────────────────┘
         │                                                      │
         │            S403: Report the CSI                      │
         │──────────────────────────────────────────────────────▶│
         │                                                      │
```

FIG. 4

```
┌─────────────────┐                                    ┌─────────────────┐
│ Terminal device │                                    │ Network device  │
└────────┬────────┘                                    └────────┬────────┘
         │                                                      │
         │   S501: CSI reporting configuration group, where the │
         │      CSI reporting configuration group includes k CSI│
         │   reporting configurations, and different CSI reporting│
         │   configurations are associated with different TCI states│
         │──────────────────────────────────────────────────────▶│
         │                                                      │
         │                    ┌─────────────────────────────────────────┐
         │                    │ S502: Measure CSI on a CSI-RS resource  │
         │                    │   set associated with the CSI reporting │
         │                    │           configuration group           │
         │                    └─────────────────────────────────────────┘
         │                                                      │
         │            S503: Report the CSI                      │
         │──────────────────────────────────────────────────────▶│
         │                                                      │
```

FIG. 5

EP 4 210 378 B1

FIG. 6

FIG. 7

97

49

FIG. 8

**EP 4 210 378 B1**

**REFERENCES CITED IN THE DESCRIPTION**

**Non-patent literature cited in the description**

- *R1-2006796, 3GPP draft, RAN WG 1*, 08 August 2020
- *R1-2005623, 3GPP draft, RAN WG1*, 08 August 2020
- *R1-1715476, 3GPP draft, RAN WG1*, 17 September 2017